(19) Europäisches Patentamt
European Patent Office
Office européen des brevets

(11) EP 4 502 061 A1

(12) **EUROPEAN PATENT APPLICATION**
published in accordance with Art. 153(4) EPC

(43) Date of publication:
**05.02.2025 Bulletin 2025/06**

(21) Application number: **23774727.4**

(22) Date of filing: **16.03.2023**

(51) International Patent Classification (IPC):
***C08L 67/02*** *(2006.01)* ***C08J 5/18*** *(2006.01)*

(52) Cooperative Patent Classification (CPC):
**C08J 5/18; C08L 67/02**

(86) International application number:
**PCT/JP2023/010256**

(87) International publication number:
**WO 2023/182131 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.03.2022 JP 2022050490**

(71) Applicant: **TOYOBO CO., LTD.**
**Osaka-shi, Osaka 530-0001 (JP)**

(72) Inventors:
- **YOSHINO, Kenji**
  **Osaka-shi, Osaka 530-0001 (JP)**
- **SHIBANO, Hiroshi**
  **Osaka-shi, Osaka 530-0001 (JP)**
- **SASAI, Tamayo**
  **Otsu-shi, Shiga 520-0292 (JP)**
- **KINAMI, Maki**
  **Otsu-shi, Shiga 520-0292 (JP)**
- **YAMAMOTO, Yu**
  **Otsu-shi, Shiga 520-0292 (JP)**
- **NISHINAKA, Fumiaki**
  **Otsu-shi, Shiga 520-0292 (JP)**
- **MORIYAMA, Nobuo**
  **Otsu-shi, Shiga 520-0292 (JP)**

(74) Representative: **Vossius & Partner**
**Patentanwälte Rechtsanwälte mbB**
**Siebertstrasse 3**
**81675 München (DE)**

# (54) METHOD FOR PRODUCING POLYESTER FILM USING RECYCLED POLYESTER RESIN, AND POLYESTER FILM

(57) A method for producing a polyester film, comprising mixing a recovered polyester resin (A) and a polyester resin (B) comprising an aluminum compound and a phosphorus compound, the polyester resin (A) satisfying the following (1) to (3): (1) the polyester resin (A) comprises at least one element selected from antimony, titanium, and germanium; (2) the polyester resin (A) has a total content of antimony, titanium, and germanium elements of 2 to 500 ppm by mass; and (3) the polyester resin (A) has an intrinsic viscosity of 0.5 to 0.8 dl/g.

EP 4 502 061 A1

## Description

### Technical Field

The present invention relates to a method for producing a polyester film comprising a recovered polyester resin.

### Background Art

Polyester resins, represented by polyethylene terephthalate (PET), polyethylene naphthalate (PEN), and the like, have excellent transparency, mechanical characteristics, and chemical characteristics. Depending on their characteristics, polyester resins are widely used in various fields of, for example, fibers for clothing and industrial materials, various films or sheets for packaging and industrial purposes, and hollow molded articles for bottles and engineering plastics.

In recent years, for example, hollow molded articles produced by using a polyester resin have become more essential in our daily life. On the other hand, the increased use of hollow molded articles has caused various problems, such as resource depletion, increased marine debris, and global warming. As a solution to such problems, a recovery and recycling system in which used hollow molded articles, such as used polyester bottles, are collected and reused has been attracting attention.

For polyester films as well, various proposals have been made to use such recovered polyester resin as a starting material to form a film.

However, if a typically widely used polyester resin that is obtained by using as a polymerization catalyst an antimony compound, a titanium compound, or a germanium compound is recovered after use and recycled, coloring of the polyester resin and reduction in the molecular weight would occur due to degradation of the polyester resin, and improvement in this respect is in demand. For use as films, in particular, selvage waste etc. that are formed when stretching a film during film production are often reused as a starting resin material. For this reason, even recovered polyester resin is required to have reduced coloring and achieve a small reduction in the molecular weight after heat melting.

For solving the above problems, a method that involves addition of a hindered phenol compound in the production of a polyester resin in which an antimony compound, a titanium compound, or a germanium compound is used as a polymerization catalyst is known (see, for example, PTL 1 and PTL 2).

Although the methods of PTL 1 and PTL 2 improve thermal oxidation stability, further improvements are required in terms of suppressing deterioration of the physical properties of the polyester resin when recycling is performed.

On the other hand, the present inventors have found a catalyst with excellent thermal stability. Specifically, the present inventors have found a catalyst comprising an aluminum compound and a phosphorus compound having a hindered phenol structure as disclosed in PTL 3 and PTL 4. However, no analysis has been made in terms of recycling used polyester resin, in particular, a used polyester resin obtained by using at least one member selected from an antimony compound, a titanium compound, or a germanium compound as a polymerization catalyst, and using it to form a film.

### Citation List

#### Patent Literature

PTL 1: WO2013/154042
PTL 2: WO2013/154043
PTL 3: WO2007/032325
PTL 4: JP2006-169432A

### Summary of Invention

#### Technical Problem

The present invention has been made to solve the above problems found in known techniques. An object of the present invention is to provide a method for producing a polyester film by using used polyester resin that is obtained by using at least one member selected from an antimony compound, a titanium compound, or a germanium compound as a polymerization catalyst. The produced polyester film has reduced coloring, achieves a small reduction in strength due to a reduction in the molecular weight, and also achieves less degradation even when scraps of the film are reused. Another

object of the present invention is to provide a polyester film comprising a recovered polyester resin.

Solution to Problem

The present inventors conducted extensive research to solve the above problems and found that a polyester film that has excellent recyclability, reduced coloring, and a small reduction in strength can be produced by adding a polyester resin comprising an aluminum compound and a phosphorus compound to a recovered polyester resin comprising at least one element selected from antimony, titanium, and germanium, followed by melting and molding.

Specifically, the present invention encompasses the following embodiments.

[Item 1]
A method for producing a polyester film, comprising mixing a recovered polyester resin (A) and a polyester resin (B) comprising an aluminum compound and a phosphorus compound, the polyester resin (A) satisfying the following (1) to (3):

(1) the polyester resin (A) comprises at least one element selected from antimony, titanium, and germanium;
(2) the polyester resin (A) has a total content of antimony, titanium, and germanium elements of 2 to 500 ppm by mass; and
(3) the polyester resin (A) has an intrinsic viscosity of 0.5 to 0.8 dl/g.

[Item 2]
The method for producing a polyester film according to Item 1, wherein the polyester resin (B) satisfies the following (4) and (5):

(4) the polyester resin (B) has an aluminum element content of 5 to 50 ppm by mass; and
(5) the polyester resin (B) has a phosphorus element content of 5 to 1000 ppm by mass.

[Item 3]
The method for producing a polyester film according to Item 1 or 2, comprising melt-mixing the polyester resin (A) and the polyester resin (B) to obtain a polyester resin composition (C) .
[Item 4]
The method for producing a polyester film according to any one of Items 1 to 3, further comprising mixing a polyester resin (D).
[Item 5]
A method for producing a polyester film, comprising mixing a polyester resin composition (C) and a polyester resin (D), the polyester resin composition (C) being a molten mixture of a recovered polyester resin (A) and a polyester resin (B) comprising an aluminum compound and a phosphorus compound, and the polyester resin (A) satisfying the following (1) to (3):

(1) the polyester resin (A) comprises at least one element selected from antimony, titanium, and germanium;
(2) the polyester resin (A) has a total content of antimony, titanium, and germanium elements of 2 to 500 ppm by mass; and
(3) the polyester resin (A) has an intrinsic viscosity of 0.5 to 0.8 dl/g.

[Item 6]
The method for producing a polyester film according to any one of Items 1 to 5, wherein the polyester resin composition (C) has an intrinsic viscosity retention of 89% or more.
[Item 7]
The method for producing a polyester film according to any one of Items 1 to 6, wherein the polyester resin (A) has an intrinsic viscosity retention of 92% or less.
[Item 8]
The method for producing a polyester film according to any one of Items 1 to 7, wherein the polyester resin (B) has an intrinsic viscosity retention of 93% or more.
[Item 9]
The method for producing a polyester film according to any one of Items 1 to 8, wherein a polyester resin (E) constituting the polyester film has an intrinsic viscosity retention of 89% or more.
[Item 10]
The method for producing a polyester film according to any one of Items 1 to 9, wherein the amount of the polyester

resin (A) is 5 to 95 parts by mass per 100 parts by mass of the total of the polyester resin (A) and the polyester resin (B).
[Item 11]
The method for producing a polyester film according to any one of Items 1 to 10, wherein the amount of the polyester resin (D) is 5 to 95 parts by mass per 100 parts by mass of the total of the polyester resin (A), the polyester resin (B), and the polyester resin (D).
[Item 12]
The method for producing a polyester film according to any one of Items 1 to 11, wherein the polyester film is a multilayer polyester film having at least two layers, and wherein at least one surface of the film is a layer that does not contain the polyester resin (A).
[Item 13]
The method for producing a polyester film according to any one of Items 1 to 12, wherein the phosphorus compound comprises a phosphorus element and a phenolic structure in the same molecule.
[Item 14]
The method for producing a polyester film according to any one of Items 1 to 13, wherein the polyester resin (A) comprises at least antimony and germanium elements.
[Item 15]
The method for producing a polyester film according to any one of Items 1 to 14, wherein the polyester resin (A) comprises at least isophthalic acid as a copolymerization component.
[Item 16]
The method for producing a polyester film according to Item 4, wherein the polyester resin (D) comprises a melt resistivity adjuster.
[Item 17]
A polyester film composed of a resin (E) comprising a recovered polyester resin (A) and a polyester resin (B) comprising an aluminum compound and a phosphorus compound, the polyester resin (A) satisfying the following (1) to (3):

(1) the polyester resin (A) comprises at least one element selected from antimony, titanium, and germanium;
(2) the polyester resin (A) has a total content of antimony, titanium, and germanium elements of 2 to 500 ppm by mass; and
(3) the polyester resin (A) has an intrinsic viscosity of 0.5 to 0.8 dl/g.

[Item 18]
The polyester film according to Item 17, wherein the polyester resin (B) satisfies the following (4) and (5):

(4) the polyester resin (B) has an aluminum element content of 5 to 50 ppm by mass; and
(5) the polyester resin (B) has a phosphorus element content of 5 to 1000 ppm by mass.

[Item 19]
The polyester film according to Item 17 or 18, wherein the polyester resin (E) further comprises a polyester resin (D).
[Item 20]
The polyester film according to any one of Items 17 to 19, wherein the polyester resin (E) has an intrinsic viscosity retention of 89% or more.
[Item 21]
A polyester film comprising at least antimony, germanium, and aluminum elements in a polyester resin constituting the film.
[Item 22]
The polyester film according to Item 21, wherein the polyester resin constituting the film comprises isophthalic acid as a copolymerization component.

## Advantageous Effects of Invention

According to the present invention, a polyester film with less degradation of the resin, as well as, for example, a small reduction in the molecular weight, reduced coloring, and a small reduction in mechanical strength can be obtained even with the use of a recovered polyester as a starting material.

## Description of Embodiments

In the present invention, a polyester film is produced by mixing a recovered polyester resin (A) and a polyester

resin (B) comprising an aluminum compound and a phosphorus compound. The obtained polyester film has excellent features, such as a small reduction in the molecular weight, reduced coloring, and/or a small reduction in mechanical strength.

Polyester Resin (A)

The polyester resin (A) is a polyester resin recovered from a polyester resin that has been used in any form. The polyester resin (A) may have any shape and preferably has a shape that is easily mixed with a polyester resin (B). Examples of the shape include chips, flakes, and powder.

The polyester resin (A) that has been used in any form refers to a resin that was once melted to produce a polyester molded article. Examples include PET bottles collected from a town, trays and other containers, fibers and products, waste products before being used to make products in production, B-grade products that were not shipped to the market, the selvages of films that were held when stretching the films, scraps from slits, and molded products that were returned due to complaints etc.

These may be used singly with a known origin, such as collected PET bottles or selvages of films, or as a mixture of these with different origins.

The polyester resin (A) preferably comprises an ethylene terephthalate structural unit in an amount of 50 mol% or more, more preferably 70 mol% or more, even more preferably 80 mol% or more, and particularly preferably 90 mol% or more. Polycarboxylic acid components other than terephthalic acid and polyhydric alcohol components other than ethylene glycol for use may be the components for the polyester resin (B) described below.

The polyester resin (A) for use is preferably polyethylene terephthalate resin for quality control reasons. In this case, the polyester resin (A) may comprise an isophthalic acid component in the copolymerization components. The lower limit of the isophthalic acid component content is preferably 0.02 mol%, more preferably 0.05 mol%, even more preferably 0.1 mol%, particularly preferably 0.2 mol%, and most preferably 0.3 mol%, when all the acid components are taken as 100 mol%. The upper limit is preferably 5.0 mol%, more preferably 4.0 mol%, even more preferably 3.0 mol%, particularly preferably 2.5 mol%, and most preferably 2.0 mol%.

Diethylene glycol is contained in a polyester resin as a by-product of ethylene glycol during polyester polymerization. Additionally, diethylene glycol is also sometimes added during polymerization to adjust crystallization.

The lower limit of the diethylene glycol component content in the polyester resin (A) is preferably 0.5 mol%, more preferably 0.8 mol%, even more preferably 1.0 mol%, particularly preferably 1.2 mol%, and most preferably 1.4 mol%, when all the glycol components are taken as 100 mol%. The upper limit is preferably 5.0 mol%, more preferably 4.0 mol%, even more preferably 3.5 mol%, and particularly preferably 3.0 mol%.

The upper limit of the acid components or glycol components as the copolymerization components of the polyester resin (A) other than isophthalic acid and diethylene glycol is preferably 3.0 mol%, more preferably 2.5 mol%, and even more preferably 2.0 mol% mol%, when all the acid components are taken as 100 mol%, or when all the glycol components are taken as 100 mol%.

The lower limit of the total amount of the copolymerization components of the polyester resin (A) in terms of the total of the acid components and the glycol components is preferably 0.5 mol%, more preferably 1.0 mol%, even more preferably 1.5 mol%, and particularly preferably 2.0 mol%, when the total of all the acid components and all the glycol components is taken as 200 mol%. The upper limit is preferably 7.0 mol%, more preferably 6.0 mol%, even more preferably 5.0 mol%, and particularly preferably 4 mol%. If the upper limit exceeds the above ranges, the obtained polyester film may have decreased heat resistance or decreased mechanical strength, and in order to prevent this, restrictions may be imposed on the amount of the recovered polyester resin (A) added.

The polyester resin (A) preferably comprises at least one element selected from antimony, titanium, and germanium. Specifically, the polyester resin (A) is preferably produced by using a catalytic amount of at least one polymerization catalyst selected from an antimony compound, a titanium compound, and a germanium compound.

The total content of antimony, titanium, and germanium elements in the polyester resin (A) is 2 to 500 ppm by mass, preferably 5 to 400 ppm by mass, more preferably 10 to 300 ppm by mass, and even more preferably 50 to 250 ppm by mass. If the content exceeds 500 ppm by mass, the intrinsic viscosity retention of the polyester resin composition (C) described below may become insufficient. In the present specification, "ppm by mass" means $10^{-4}$ mass%.

The polyester resin (A) may also comprise, for example, the colorants, lubricant particles, ultraviolet absorbers, melt resistivity adjusters, antistatic agents, antioxidants, and heat stabilizers described below.

The polyester resin (A) has an intrinsic viscosity of preferably 0.5 to 0.8 dl/g, more preferably 0.55 to 0.75 dl/g, and even more preferably 0.57 to 0.73 dl/g.

If the intrinsic viscosity of the polyester resin (A) is less than the above ranges, the mechanical strength or impact resistance of the polyester film produced by using the polyester resin (A) may be insufficient. On the other hand, if the intrinsic viscosity of the polyester resin (A) exceeds the above ranges, local heat generation due to shear stress may increase when the polyester resin (A) is melt-mixed with the polyester resin (B), which may result in degradation of the resin

or increased stress when stretching, possibly making it difficult to produce a film. In addition, the intrinsic viscosity of the polyester resin (B) to be mixed may increase, or restrictions imposed on the amount of the polyester resin (B) to be mixed may increase.

The polyester resin (A) has an intrinsic viscosity retention of preferably 92% or less, more preferably 91% or less, even more preferably 90% or less, and particularly preferably 89% or less. If the intrinsic viscosity retention of the polyester resin (A) exceeds 92%, the effect of improving recyclability achieved by blending the polyester resin (B) may become insufficient. The measurement method for intrinsic viscosity retention is described below. The polyester resin (A) has an intrinsic viscosity retention of preferably 70% or more, more preferably 75% or more, and even more preferably 80% or more. If the intrinsic viscosity retention is less than 70%, the addition of the polyester resin (B) may not produce a sufficient effect, or a reduction in the amount of the polyester resin (A) used may be necessary, which may reduce the significance of using recovered polyester.

If the polyester resin (A) is from PET bottles collected from a town, the amount of cyclic trimer (CT) contained in the polyester resin (A) is preferably 9000 ppm by mass or less, more preferably 8000 ppm by mass or less, and even more preferably 7500 ppm by mass or less, and particularly preferably 7000 ppm by mass or less. The CT content is preferably 4000 ppm by mass or more, more preferably 4500 ppm by mass or more, and even more preferably 5000 ppm by mass or more.

Although the polyester resin (A) preferably consists of a polyester resin produced by using at least one polymerization catalyst selected from an antimony compound, a titanium compound, and a germanium compound, the polyester resin (A) may comprise a polyester resin produced by using a polymerization catalyst comprising an aluminum compound and a phosphorus compound. In the polyester resin (A), the polyester resin produced by using at least one polymerization catalyst selected from an antimony compound, a titanium compound, and a germanium compound is preferably present in an amount of more than 50 mass%, preferably 70 mass% or more, and more preferably 80 mass% or more.

The polyester resin (A) may be in a pelletized form after melting collected molded articles etc. but is preferably kept in a crushed form without melting. The crushed material preferably has such a shape that the longest distance between two points is 3 to 30 mm, and more preferably 5 to 20 mm, in terms of handleability. These values are average values obtained by selecting 20 larger pieces from 100 g of the crushed material, and measuring the above distance of these pieces.

Polyester Resin (B)

The polyester resin (B) comprises an aluminum compound and a phosphorus compound. Specifically, the polyester resin (B) is preferably produced by using a catalytic amount of a polymerization catalyst comprising an aluminum compound and a phosphorus compound.

The polyester resin (B) is preferably a polymer formed of at least one member selected from a polycarboxylic acid and an ester-forming derivative thereof and at least one member selected from a polyhydric alcohol and an ester-forming derivative thereof.

Polycarboxylic Acid Component

The main polycarboxylic acid component constituting the polyester resin (B) is preferably a dicarboxylic acid. The phrase "the main polycarboxylic acid component is a dicarboxylic acid" means that a dicarboxylic acid is contained in an amount of more than 50 mol% based on all the polycarboxylic acid components. It is preferable that a dicarboxylic acid is contained in an amount of 70 mol% or more, more preferably 80 mol% or more, and even more preferably 90 mol% or more. When two or more types of dicarboxylic acids are used, the total amount is preferably within the above ranges.

Examples of dicarboxylic acids include saturated aliphatic dicarboxylic acids, such as oxalic acid, malonic acid, succinic acid, glutaric acid, adipic acid, pimelic acid, suberic acid, azelaic acid, sebacic acid, decane dicarboxylic acid, dodecane dicarboxylic acid, tetradecane dicarboxylic acid, hexadecane dicarboxylic acid, 1,3-cyclobutane dicarboxylic acid, 1,3-cyclopentane dicarboxylic acid, 1,2-cyclohexane dicarboxylic acid, 1,3-cyclohexane dicarboxylic acid, 1,4-cyclohexane dicarboxylic acid, 2,5-norbornane dicarboxylic acid, and dimer acid, and ester-forming derivatives thereof; unsaturated aliphatic dicarboxylic acids, such as fumaric acid, maleic acid, and itaconic acid, and ester-forming derivatives thereof; and aromatic dicarboxylic acids, such as orthophthalic acid, isophthalic acid, terephthalic acid, 5-(alkali metal) sulfoisophthalic acid, diphenic acid, 1,3-naphthalene dicarboxylic acid, 1,4-naphthalene dicarboxylic acid, 1,5-naphthalene dicarboxylic acid, 2,6-naphthalene dicarboxylic acid, 2,7-naphthalene dicarboxylic acid, 4,4'-biphenyl dicarboxylic acid, 4,4'-diphenylsulfone dicarboxylic acid, 4,4'-biphenyl ether dicarboxylic acid, 1,2-bis(phenoxy)ethane-p,p'-dicarboxylic acid, pamoic acid, and anthracene dicarboxylic acid, and ester-forming derivatives thereof.

The main polycarboxylic acid component is more preferably terephthalic acid or an ester-forming derivative thereof or a naphthalene dicarboxylic acid or an ester-forming derivative thereof. Examples of naphthalene dicarboxylic

acids or ester-forming derivatives thereof include 1,3-naphthalene dicarboxylic acid, 1,4-naphthalene dicarboxylic acid, 1,5-naphthalene dicarboxylic acid, 2,6-naphthalene dicarboxylic acid, and 2,7-naphthalene dicarboxylic acid, and ester-forming derivatives thereof.

The phrase "the main polycarboxylic acid component is terephthalic acid or an ester-forming derivative thereof or a naphthalene dicarboxylic acid or an ester-forming derivative thereof" means that the total amount of terephthalic acid or an ester-forming derivative thereof and a naphthalene dicarboxylic acid or an ester-forming derivative thereof contained is more than 50 mol% based on all the polycarboxylic acid components. The total amount is preferably 70 mol% or more, more preferably 80 mol% or more, and even more preferably 90 mol% or more.

The dicarboxylic acid is particularly preferably terephthalic acid, 2,6-naphthalene dicarboxylic acid, or an ester-forming derivative thereof. Other dicarboxylic acids may also be used as constituent components, if necessary.

As a polycarboxylic acid other than these dicarboxylic acids, a small amount of a trivalent or higher-valent polycarboxylic acid or a hydroxycarboxylic acid may be used in combination. A trivalent to tetravalent polycarboxylic acid is preferred. Examples of the polycarboxylic acids include ethane tricarboxylic acid, propane tricarboxylic acid, butane tetracarboxylic acid, pyromellitic acid, trimellitic acid, trimesic acid, and 3,4,3',4'-biphenyl tetracarboxylic acid, and ester-forming derivatives thereof. The amount of a trivalent or higher valent polycarboxylic acid is preferably 20 mol% or less, preferably 10 mol% or less, and even more preferably 5 mol% or less, based on all the polycarboxylic acid components. When two or more types of trivalent or higher-valent polycarboxylic acids are used, the total amount is preferably within the above ranges.

Examples of hydroxycarboxylic acids include lactic acid, citric acid, malic acid, tartaric acid, hydroxyacetic acid, 3-hydroxybutyric acid, p-hydroxybenzoic acid, p-(2-hydroxyethoxy)benzoic acid, and 4-hydroxycyclohexanecarboxylic acid, and ester-forming derivatives thereof. The amount of the hydroxycarboxylic acid is preferably 20 mol% or less, preferably 10 mol% or less, and even more preferably 5 mol% or less, based on all the polycarboxylic acid components. When two or more types of hydroxycarboxylic acids are used, the total amount is preferably within the above ranges.

Examples of ester-forming derivatives of polycarboxylic acids or hydroxycarboxylic acids include alkyl esters, acid chlorides, and acid anhydrides thereof.

Polyhydric Alcohol Component

The main polyhydric alcohol component constituting the polyester resin (B) is preferably a glycol. The phrase "the main polyhydric alcohol component is a glycol" means that a glycol is contained in an amount of more than 50 mol%, preferably 70 mol% or more, more preferably 80 mol% or more, and even more preferably 90 mol% or more, based on all the polyhydric alcohol components. When two or more types of glycols are used, the total amount is preferably within the above ranges.

Examples of glycols include alkylene glycols, such as ethylene glycol, 1,2-propylene glycol, 1,3-propylene glycol, diethylene glycol, triethylene glycol, 1,2-butylene glycol, 1,3-butylene glycol, 2,3-butylene glycol, 1,4-butylene glycol, 1,5-pentanediol, neopentyl glycol, 1,6-hexanediol, 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, 1,4-cyclohexanediethanol, 1,10-decamethylene glycol, and 1,12-dodecanediol; aliphatic glycols, such as polyethylene glycol, polytrimethylene glycol, and polytetramethylene glycol; aromatic glycols, such as hydroquinone, 4,4'-dihydroxybisphenol, 1,4-bis(β-hydroxyethoxy) benzene, 1,4-bis(β-hydroxyethoxyphenyl)sulfone, bis(p-hydroxyphenyl)ether, bis(p-hydroxyphenyl)sulfone, bis(p-hydroxyphenyl)methane, 1,2-bis(p-hydroxyphenyl)ethane, bisphenol A, bisphenol C, and 2,5-naphthalenediol, as well as glycols in which ethylene oxide is added to these glycols.

Of these glycols, alkylene glycols are preferable, and ethylene glycol, 1,3-propylene glycol, 1,4-butylene glycol, or 1,4-cyclohexanedimethanol is more preferable. The alkylene glycols may contain a substituent or an alicyclic structure in its molecular chain, and two or more types of alkylene glycols may be used at the same time.

As a polyhydric alcohol other than these glycols, a small amount of a trivalent or higher-valent polyhydric alcohol may be used in combination. A trivalent to tetravalent polyhydric alcohol is preferable. Examples of trivalent or higher-valent polyhydric alcohols include trimethylolmethane, trimethylolethane, trimethylolpropane, pentaerythritol, glycerol, and hexanetriol.

The amount of the trivalent or higher-valent polyhydric alcohol is preferably 20 mol% or less, more preferably 10 mol% or less, and even more preferably 5 mol% or less, based on all the polyhydric alcohol components. When two or more types of trivalent or higher-valent polyhydric alcohols are used, the total amount is preferably within the above ranges.

The use of a cyclic ester in combination is also acceptable. Examples of cyclic esters include ε-caprolactone, β-propiolactone, β-methyl-β-propiolactone, δ-valerolactone, glycolide, and lactide. Examples of ester-forming derivatives of polyhydric alcohols include an ester of a polyhydric alcohol with a lower aliphatic carboxylic acid, such as acetic acid.

The amount of cyclic ester is preferably 20 mol% or less, more preferably 10 mol% or less, and even more preferably 5 mol% or less, based on the total amount of all the polycarboxylic acid components and all the polyhydric alcohol components. When two or more types of cyclic esters are used, the total amount is preferably within the above

ranges.

The composition of the polyester resin (B) may be determined according to the composition of the film to be produced, also taking into consideration the composition of the polyester resin (A). For example, if the polyester resin (A) comprises mainly a recovered product from beverage bottles, the main constituent unit of the polyester resin (A) is ethylene terephthalate. Therefore, to produce a polyethylene terephthalate film, the polyester resin (B) should also be polyethylene terephthalate. In this case, the polyester resin (B) preferably comprises 90% or more, more preferably 95% or more, and even more preferably 97% or more of a component derived from ethylene terephthalate monomers.

On the other hand, if the film to be produced is a copolymer composition film, such as a heat-shrink film or a film for mold processing, the polyester resin (B) is preferably a copolymerized polyester, or a polyester resin other than polyethylene terephthalate.

Examples include ethylene terephthalate isophthalate copolymers, ethylene butylene terephthalate copolymers, ethylene 2,2-dimethylpropylene terephthalate copolymers (in which neopentyl glycol is added to a glycol component), ethylene 2,2'-oxydiethylene copolymers (in which diethylene glycol is added to a glycol component), ethylene 1,4-cyclohexane dimethylene terephthalate copolymers (in which 1,4-cyclohexanedimethanol is added to a glycol component), polyethylene isophthalate, polybutylene terephthalate, poly 2,2-dimethylpropylene terephthalate, 2,2'-oxydiethylene terephthalate, and 1,4-cyclohexanedimethylene terephthalate, as well as those in which additional components are further added to these.

The polyester resin (B) is preferably a polymer of only a single monomer selected from ethylene terephthalate, butylene terephthalate, propylene terephthalate, 1,4-cyclohexanedimethylene terephthalate, ethylene naphthalate, butylene naphthalate, or propylene naphthalate, or a copolymer of two or more of these monomers. The polyester resin (B) is more preferably polyethylene terephthalate or a copolymer of ethylene terephthalate and at least one of the monomers above other than ethylene terephthalate, and particularly preferably polyethylene terephthalate.

Polymerization Catalyst

As described above, the polyester resin (B) is preferably produced by using a polymerization catalyst comprising an aluminum compound and a phosphorus compound.

Aluminum Compound

The aluminum compound constituting the polymerization catalyst of the polyester resin (B) is not limited as long as it is dissolved in a solvent, and known aluminum compounds can be used without limitation. Examples of aluminum compounds include carboxylates, such as aluminum formate, aluminum acetate, basic aluminum acetate, aluminum propionate, aluminum oxalate, aluminum acrylate, aluminum laurate, aluminum stearate, aluminum benzoate, aluminum trichloroacetate, aluminum lactate, aluminum citrate, aluminum tartrate, and aluminum salicylate; inorganic acid salts, such as aluminum chloride, aluminum hydroxide, aluminum hydroxychloride, aluminum nitrate, aluminum sulfate, aluminum carbonate, aluminum phosphate, and aluminum phosphonate; aluminum alkoxides, such as aluminum methoxide, aluminum ethoxide, aluminum n-propoxide, aluminum isopropoxide, aluminum n-butoxide, and aluminum t-butoxide; chelate compounds, such as aluminum acetylacetonate, aluminum ethylacetoacetate, and aluminum ethylacetoacetate di-iso-propoxide; and organic aluminum compounds, such as trimethylaluminum and triethylaluminum, partially hydrolyzed products thereof, reaction products of aluminum alkoxides or aluminum chelate compounds and hydroxycarboxylic acids, and composite oxides of aluminum oxides, ultrafine aluminum oxide particles, aluminum silicate, or aluminum with titanium, silicon, zirconium, alkali metals, alkaline earth metals, etc. Of these, the aluminum compound is preferably at least one member selected from carboxylates, inorganic acid salts, and chelate compounds, more preferably at least one member selected from aluminum acetate, basic aluminum acetate, aluminum chloride, aluminum hydroxide, aluminum hydroxychloride, and aluminum acetylacetonate, even more preferably at least one member selected from aluminum acetate, basic aluminum acetate, aluminum chloride, aluminum hydroxide, aluminum hydroxychloride, and aluminum acetylacetonate, particularly preferably at least one member selected from aluminum acetate and basic aluminum acetate, and most preferably basic aluminum acetate.

The aluminum compound is preferably an aluminum compound soluble in a solvent, such as water or glycol. The solvents that can be used in the production of the polyester resin (B) include water and alkylene glycols. Examples of alkylene glycols include ethylene glycol, diethylene glycol, triethylene glycol, propylene glycol, dipropylene glycol, tripropylene glycol, trimethylene glycol, ditrimethylene glycol, tetramethylene glycol, ditetramethylene glycol, and neopentyl glycol. The solvent is preferably at least one member selected from water, ethylene glycol, trimethylene glycol, and tetramethylene glycol, and more preferably water or ethylene glycol.

The polyester resin (B) has an aluminum element content of preferably 5 to 50 ppm by mass, more preferably 7 to 40 ppm by mass, even more preferably 10 to 30 ppm by mass, and particularly preferably 15 to 25 ppm by mass. If the aluminum element content is less than 5 ppm by mass, the polymerization activity may be insufficient. On the other hand, if

the content exceeds 50 ppm by mass, the amount of aluminum-based foreign matter may increase.

If the cost is a great concern, the aluminum element content in the polyester resin (B) is preferably 9 to 20 ppm by mass, more preferably 9 to 19 ppm by mass, even more preferably 10 to 17 ppm by mass, and particularly preferably 12 to 17 ppm by mass. If the aluminum element content is less than 9 ppm by mass, the polymerization activity may be insufficient. On the other hand, if the content exceeds 20 ppm by mass, the amount of aluminum-based foreign matter may increase, in relation to the phosphorus element content described below, and in addition, the catalyst cost will increase.

Phosphorus Compound

The phosphorus compound constituting the polymerization catalyst of the polyester resin (B) is not particularly limited. The use of a phosphonic acid-based compound and a phosphinic acid-based compound, which produce a great effect of improving catalytic activity, is preferable. Of these, the use of a phosphonic acid-based compound, which produces a particularly great effect of improving catalytic activity, is more preferable.

Of the above, the phosphorus compound is preferably a phosphorus compound comprising a phosphorus element and a phenolic structure in the same molecule. The phosphorus compound is not particularly limited as long as it comprises a phosphorus element and a phenolic structure in the same molecule. The phosphorus compound for use is preferably one or more compounds selected from the group consisting of a phosphonic acid-based compound comprising a phosphorus element and a phenolic structure in the same molecule and a phosphinic acid-based compound comprising a phosphorus element and a phenolic structure in the same molecule to produce a great effect of improving catalytic activity, and more preferably one or more phosphonic acid-based compounds comprising a phosphorus element and a phenolic structure in the same molecule to produce a particularly great effect of improving catalytic activity.

The phosphorus compound comprising a phosphorus element and a phenolic structure in the same molecule may be, for example, a compound represented by $P(=O)R^1(OR^2)(OR^3)$ or $P(=O)R^4R^4(OR^2)$. $R^1$ is a $C_1$-$C_{50}$ hydrocarbon group containing a phenol moiety, or a $C_1$-$C_{50}$ hydrocarbon group containing a substituent, such as a hydroxyl group, a halogen group, an alkoxy group, or an amino group, and a phenolic structure. $R^4$ is hydrogen, a $C_1$-$C_{50}$ hydrocarbon group, or a $C_1$-$C_{50}$ hydrocarbon group containing a substituent, such as a hydroxyl group, a halogen group, an alkoxy group, or an amino group. $R^2$ and $R^3$ are each independently hydrogen, a $C_1$-$C_{50}$ hydrocarbon group, a $C_1$-$C_{50}$ hydrocarbon group containing a substituent, such as a hydroxyl group or an alkoxy group. However, the hydrocarbon group may contain a branched structure, an alicyclic structure, such as cyclohexyl, or an aromatic ring structure, such as phenyl or naphthyl. The ends of $R^2$ and $R^4$ may be bonded to each other.

Examples of the phosphorus compound comprising a phosphorus element and a phenolic structure in the same molecule include p-hydroxyphenylphosphonic acid, dimethyl p-hydroxyphenyl phosphonate, diethyl p-hydroxyphenyl phosphonate, diphenyl p-hydroxyphenyl phosphonate, bis(p-hydroxyphenyl)phosphinic acid, methyl bis(p-hydroxyphenyl) phosphinate, phenyl bis(p-hydroxyphenyl) phosphinate, p-hydroxyphenyl phosphinic acid, methyl p-hydroxyphenyl phosphinate, and phenyl p-hydroxyphenyl phosphinate.

In addition to the examples listed above, the phosphorus compound comprising a phosphorus element and a phenolic structure in the same molecule may include, for example, a phosphorus compound comprising a phosphorus element and a hindered phenol structure (e.g., a phenolic structure in which an alkyl group with a tertiary carbon (preferably an alkyl group with a tertiary carbon in a benzyl position, such as a t-butyl group or a thexyl group; a neopentyl group; or the like) is attached at one or two ortho-positions with respect to a hydroxyl group) in the same molecule, and preferably a phosphorus compound comprising a phosphorus element and the structure of chemical formula A below in the same molecule. In particular, dialkyl 3,5-di-tert-butyl-4-hydroxybenzylphosphonate represented by chemical formula B below is more preferable. The phosphorus compound for use in the production of the polyester resin (B) is preferably dialkyl 3,5-di-tert-butyl-4-hydroxybenzylphosphonate represented by chemical formula B below, and may also include modified forms of dialkyl 3,5-di-tert-butyl-4-hydroxybenzylphosphonate. The details of the modified forms are described below.

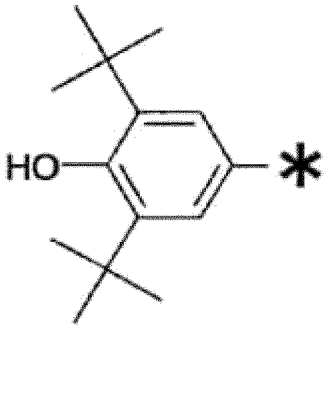

Chemical formula A

In chemical formula A, * represents a bond.

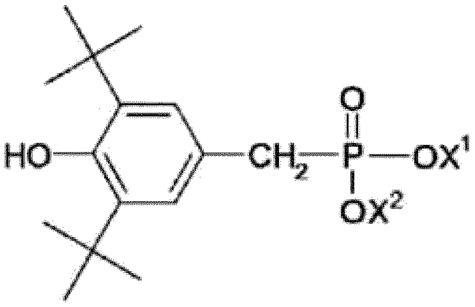

Chemical formula B

In chemical formula B, $X^1$ and $X^2$ are each hydrogen or a $C_1$-$C_4$ alkyl group.

In the present specification, a polyester resin is defined as "comprising a hindered phenol structure" when at least one hindered phenol structure is detected in a solution of the polyester resin in a hexafluoroisopropanol-based solvent by P-NMR measurement. Specifically, the polyester resin (B) is preferably a polyester resin produced by using a phosphorus compound comprising a phosphorus element and a hindered phenol structure in the same molecule as a polymerization catalyst. The method for detecting the hindered phenol structure in the polyester resin (B) (P-NMR measurement method) is described below.

In chemical formula B above, $X^1$ and $X^2$ are preferably both a $C_1$-$C_4$ alkyl group, and more preferably a $C_1$-$C_2$ alkyl group. In particular, an ethyl ester body having two carbon atoms is preferably Irganox 1222 (produced by BASF), which is an easily available commercial product.

The phosphorus compound is preferably used after heat treatment in a solvent. The details of heat treatment are described below. If the phosphorus compound is dialkyl 3,5-di-tert-butyl-4-hydroxybenzylphosphonate, which is a phosphorus compound represented by chemical formula B above, a part of dialkyl 3,5-di-tert-butyl-4-hydroxybenzylphosphonate, which is a phosphorus compound represented by chemical formula B above, undergoes a structural change by the heat treatment mentioned above. Examples of such a structural change include removal of a t-butyl group, hydrolysis of an ethyl ester group, and a hydroxyethyl ester exchange structure (an ester exchange structure with ethylene glycol). Therefore, in the present invention, the phosphorus compound includes, in addition to dialkyl 3,5-di-tert-butyl-4-hydroxybenzylphosphonate represented by chemical formula B, phosphorus compounds that have undergone a structural change. The removal of a t-butyl group occurs significantly at high temperatures in the polymerization step.

Below, nine phosphorus compounds are shown in which diethyl 3,5-di-tert-butyl-4-hydroxybenzylphosphonate when used as the phosphorus compound has partially undergone a structural change. The amounts of the components of each of the phosphorus compounds that have undergone a structural change in a glycol solution can be quantified by a P-NMR measurement method.

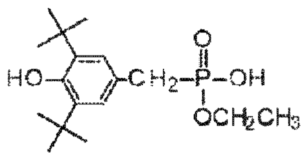
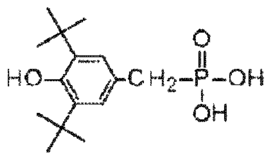
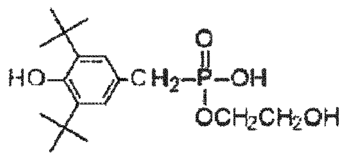

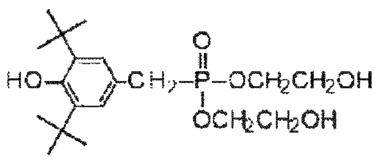
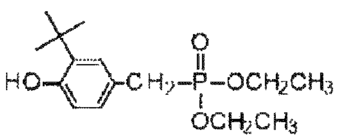
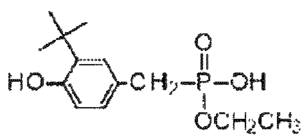

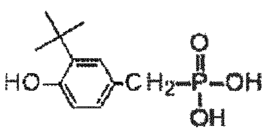
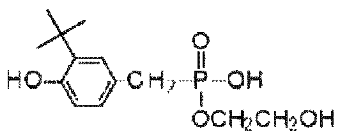
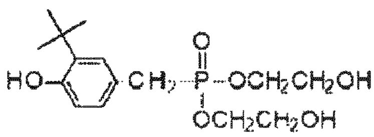

Therefore, the phosphorus compound according to the present invention may also include, in addition to dialkyl 3,5-di-tert-butyl-4-hydroxybenzylphosphonate, modified forms of dialkyl 3,5-di-tert-butyl-4-hydroxybenzylphosphonate represented by the nine chemical formulas above.

When Irganox 1222 mentioned above is used as the phosphorus compound, the nine phosphorus compound residues shown in Table 1 below are contained in the polyester resin. If at least one of the nine hindered phenol structures listed in Table 1 is detected by P-NMR measurement, the polyester resin (B) is considered to be a polyester resin produced by using a phosphorus compound comprising a phosphorus element and a hindered phenol structure in the same molecule as a polymerization catalyst. The use of a phosphorus compound comprising a hindered phenol structure can achieve sufficient polymerization activity while reducing the catalyst cost.

Table 1

| Phosphorus structure / Phenol moiety structure | 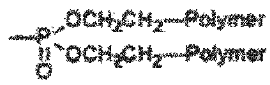 | 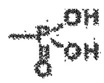 | 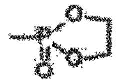 |
|---|---|---|---|
| 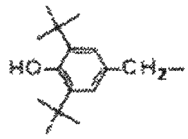 | Chemical formula 1 | Chemical formula 4 | Chemical formula 7 |
| 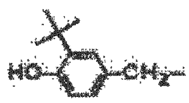 | Chemical formula 2 | Chemical formula 5 | Chemical formula 8 |
| 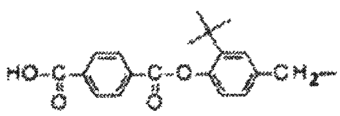 | Chemical formula 3 | Chemical formula 6 | Chemical formula 9 |

In the present invention, it is preferable that at least one of chemical formulas 1, 4, and 7 above is contained.

The polyester resin (B) has a phosphorus element content of preferably 5 to 1000 ppm by mass, more preferably 10 to 500 ppm by mass, even more preferably 15 to 200 ppm by mass, particularly preferably 20 to 100 ppm by mass, and most preferably 30 to 50 ppm by mass. If the phosphorus element content is less than 5 ppm by mass, polymerization activity may decrease, or the amount of aluminum-based foreign matter may increase. On the other hand, if the content exceeds 1000 ppm by mass, polymerization activity may decrease, or the amount of the phosphorus compound added may increase, resulting in an increase in the catalyst cost.

If the cost is a greater concern, the phosphorus element content in the polyester resin (B) is preferably 13 to 31 ppm by mass, more preferably 15 to 29 ppm by mass, and even more preferably 16 to 28 ppm by mass. If the phosphorus element content is less than 13 ppm by mass, polymerization activity may decrease, or the amount of aluminum-based foreign matter may increase. On the other hand, if the content exceeds 31 ppm by mass, polymerization activity may decrease, and the amount of phosphorus compound added may increase, resulting in an increase in the catalyst cost.

In the polyester resin (B), the molar ratio of the phosphorus element to the aluminum element (referred to below as "the residual molar ratio of the phosphorus element to the aluminum element" to distinguish it from the "added molar ratio of the phosphorus element to the aluminum element" described below) is preferably 1.00 to 5.00, more preferably 1.10 to 4.00, even more preferably 1.20 to 3.50, and particularly preferably 1.25 to 3.00. As described above, the aluminum element and the phosphorus element in the polyester resin (B) are respectively derived from the aluminum compound and the phosphorus compound used as the polymerization catalyst for the polyester resin (B). When the aluminum compound and phosphorus compound are used in combination in a specific ratio, a complex with catalytic activity is functionally formed in the polymerization system to achieve sufficient polymerization activity. Although a resin produced by using a polymerization catalyst comprising an aluminum compound and a phosphorus compound is more expensive in terms of the catalyst cost (the production cost) compared with polyester resins produced by using an antimony catalyst or other catalysts, a combined use of an aluminum compound and a phosphorus compound in a specific ratio can achieve sufficient polymerization activity while reducing the catalyst cost. A residual molar ratio of the phosphorus element to the aluminum element of less than 1.00 may reduce thermal stability or thermal oxidation stability, and may increase the amount of aluminum-based foreign matter. On the other hand, a residual molar ratio of the phosphorus element to the aluminum element exceeding 5.00 may increase the catalyst cost because the amount of the phosphorus compound added is too large.

If the cost is a greater concern, the residual molar ratio of the phosphorus element to the aluminum element is

preferably 1.32 to 1.80, and more preferably 1.38 to 1.68.

In addition to the aluminum compound and the phosphorus compound described above, other polymerization catalysts, such as an antimony compound, a germanium compound, and a titanium compound, may also be used in combination as the polymerization catalyst used in the production of the polyester resin (B) to the extent that they do not impair the characteristics, processability, color tone, etc. of the product of the polyester resin (B). The antimony element content in the polyester resin (B) is preferably 30 ppm by mass or less, the germanium element content in the polyester resin (B) is preferably 10 ppm by mass or less, and the titanium element content in the polyester resin (B) is preferably 3 ppm by mass or less. However, it is preferable that these other polycondensation catalysts are used as little as possible. However, it does not negate the possibility of trace amounts of other polymerization catalysts being mixed in due to the resin remaining in an apparatus for producing the polyester resin (B).

The aluminum element content corresponding to aluminum-based foreign matter in the polyester resin (B) is preferably 3000 ppm by mass or less, more preferably 2800 ppm by mass or less, even more preferably 2000 ppm by mass or less, and still more preferably 1500 ppm by mass or less. The aluminum-based foreign matter is caused by the aluminum compound used as a polymerization catalyst and is foreign matter that is insoluble in the polyester resin (B). An aluminum-based foreign matter content exceeding the above ranges will deteriorate the quality of molded articles due to fine foreign matter that is insoluble in the polyester resin (B), and also lead to the problem of increased filter clogging during filtration of the polyester in the polycondensation step or molding step. The preferable lower limit of the aluminum element content corresponding to aluminum-based foreign matter is 0 ppm by mass; however, due to technical difficulties, it is about 300 ppm by mass.

In the present specification, as can be understood from the fact that the amount of the aluminum element is determined according to the measurement method described in the Examples below, the indicator above is for evaluation of the amount of aluminum-based foreign matter relatively based on the amount of the aluminum element and does not represent an absolute value of the amount of aluminum-based foreign matter contained in the polyester resin.

The polyester resin (B) has an intrinsic viscosity of preferably 0.50 to 0.90 dl/g, more preferably 0.55 to 0.80 dl/g, and even more preferably 0.58 to 0.75 dl/g. If the intrinsic viscosity of the polyester resin (B) is less than the above ranges, the pneumatic transportation of the polyester resin (B) may cause the formation of a large amount of fine particles (Fine) due to friction among polyester resin pellets or friction with the pneumatic transportation piping. If the intrinsic viscosity of the polyester resin (B) exceeds the above ranges, local heat generation due to shear stress may increase when the polyester resin (B) is melt-mixed with the recovered polyester resin (A), which causes degradation of the resin or an increase in the stress during stretching, possibly making it difficult to produce a film. The intrinsic viscosity of the polyester resin (B) can be adjusted according to the intrinsic viscosity of the polyester resin (A) so that the intrinsic viscosity of the polyester that constitutes the film is within an appropriate range.

The production of the polyester resin (B) having an intrinsic viscosity exceeding 0.62 dl/g by melt polymerization alone may cause a decrease in economic efficiency. Therefore, if needed, the polyester resin (B) having an intrinsic viscosity exceeding 0.62 dl/g is preferably produced by subjecting the polyester resin (B) produced by melt polymerization to solid-phase polymerization.

When solid-phase polymerization is performed, the CT content in the polyester resin (B) is preferably 7000 ppm by mass or less, more preferably 6000 ppm by mass or less, and even more preferably 5500 ppm by mass or less. In reality, the CT content is preferably 2500 ppm by mass or more, and more preferably 3000 ppm by mass or more.

The polyester resin (B) has an intrinsic viscosity retention of preferably 93% or more, more preferably 94% or more, and even more preferably 95% or more. An intrinsic viscosity retention of the polyester resin (B) of less than 93% may decrease the intrinsic viscosity retention of the polyester resin composition (C), resulting in insufficient recyclability. The upper limit of the intrinsic viscosity retention of the polyester resin (B) is preferably 100%; however, due to technical difficulties, it is about 99%.

The method for producing the polyester resin (B) is described below.

The polyester resin (B) is preferably formed into pellets with the longest distance between two points being 2 to 10 mm, and more preferably 3 to 6 mm. Examples of the shape of the pellets include a sphere, an ellipsoid, a barrel, and a cube.

The polyester resin (B) may be, for example, a resin pelletized after polymerization or may be a recovered product in steps for molding an article by using the polyester resin (B). Examples of the recovered product in steps include B-grade products that were not shipped to the market, the selvages of films that were held when stretching the films, scraps from slits, and molded products that were returned due to complaints etc. These recovered products in steps are preferably crushed materials as in the polyester resin (A).

The polyester resin (B) may also be used as an additive masterbatch (concentrated resin) as in the polyester resin (D) described below.

Polyester Resin Composition (C)

In the present invention, the polyester resin (A) and the polyester resin (B) are mixed to produce a film. A mixture of the polyester resin (A) and the polyester resin (B) is called a "polyester resin composition (C)." In the production of a film, the polyester resin (A) and the polyester resin (B) may be fed separately into different inlets of an extruder, may be both fed into the same inlet, or may be fed after they are dry-blended in advance. In terms of handleability, it is also preferable to melt-mix the polyester resin (A) and polyester resin (B) to obtain the polyester resin composition (C) and use it in the production of a film.

The polyester resin composition (C) is preferably produced by mixing the polyester resin (A) and the polyester resin (B) in a mass ratio of 5:95 to 95:5. That is, in the polyester resin composition (C), the amount of the polyester resin (A) is preferably 5 to 95 parts by mass per 100 parts by mass of the total of the polyester resin (A) and the polyester resin (B). By adjusting the amount of the polyester resin (A) to be within the above range, coloring and a decrease in the molecular weight of the polyester resin composition (C) can be reduced. In the present specification, "reduced coloring" or "coloring is reduced" means that a decrease in the L-value described below and an increase in the b-value described below are reduced even after repeated recycling, i.e., repeated re-kneading. If the proportion of the polyester resin (A) exceeds 95 parts by mass, the intrinsic viscosity retention of the polyester resin composition (C) may become low, resulting in insufficient recyclability. On the other hand, if the proportion of the polyester resin (A) is less than 5 parts by mass, the effect of reducing coloring may be saturated, and economic efficiency may be decreased. Since the polyester resin (B) is produced by using a polymerization catalyst comprising an aluminum compound and a phosphorus compound, even when the residual molar ratio of the phosphorus element to the aluminum element is adjusted to be within the above specific ranges, the catalyst cost (production cost) is higher than that of polyester resins produced by using an antimony catalyst or other catalysts. However, a combined use of the polyester resin (A) and the polyester resin (B) enables improvement in recyclability while reducing the production cost. Although an increase in the proportion of the polyester resin (A) can contribute to reduction in the production cost of the polyester resin composition (C), the color tone tends to deteriorate due to repeated recycling. On the other hand, although an increase in the proportion of the polyester resin (B) can contribute to reduction in deterioration of color tone even after repeated recycling of the polyester resin composition (C), the production cost may increase. The mass ratio of the polyester resin (A) and the polyester resin (B) is more preferably 20:80 to 80:20, and even more preferably 25:75 to 75:25.

The polyester resin composition (C) can be produced by dry-blending the polyester resin (A) and the polyester resin (B). Alternatively, the polyester resin composition (C) may be produced by kneading the polyester resin (A) and the polyester resin (B) by a melt-extrusion method. In this case, the polyester resin composition (C) can be produced by feeding the polyester resin (A) and the polyester resin (B) separately or together after dry blending into a general-purpose kneading apparatus for resins, such as a Banbury mixer, a kneader, a single-screw extruder, a twin-screw extruder, a four-screw extruder, or a single-screw planetary extruder, to perform melting and kneading. Among these, a twin-screw extruder, a four-screw extruder, a single-screw planetary extruder, and the like, which have excellent surface renewal properties, are preferable. The extruder preferably has at least one, preferably two or more, and more preferably three or more vent ports. In a preferable embodiment, the vent ports are connected to a depressurization system to prevent degradation of the polyester resin composition (C) .

Alternatively, after the completion of the polymerization of the polyester resin (B) and before pelletization by cooling, the polyester resin (A) may be added to the polyester resin (B) in a molten state, and the mixture may be kneaded to thus obtain the polyester resin composition (C).

The polyester resin composition (C) may be formed into a film as is in a molten state. However, the polyester resin composition (C) is preferably pelletized in advance. The shape of the pellets is the same as those of the polyester resin (B).

The polyester resin composition (C) has an intrinsic viscosity of preferably 0.50 to 0.90 dl/g, more preferably 0.55 to 0.80 dl/g, and even more preferably 0.58 to 0.75 dl/g. An intrinsic viscosity of the polyester resin composition (C) of less than the above ranges may result in insufficient mechanical strength or impact resistance of the produced polyester film. An intrinsic viscosity of the polyester resin composition (C) exceeding the above ranges may decrease economic efficiency, may increase local heat generation due to shear stress when melting is performed with an extruder, resulting in degradation of the resin, or may increase the stress during stretching, making it difficult to produce a film.

The polyester resin composition (C) has an intrinsic viscosity retention of preferably 89% or more, more preferably 90% or more, even more preferably 92% or more, particularly preferably 93% or more, and most preferably 94% or more. An intrinsic viscosity retention of the polyester resin composition (C) of less than 89% may result in insufficient recyclability. The upper limit of the intrinsic viscosity retention of the polyester resin composition (C) is preferably 100%; however, due to technical difficulties, it is about 99%. The intrinsic viscosity retention of the polyester resin composition (C) is preferably higher than the intrinsic viscosity retention of the polyester resin (A). In the present specification, the term "intrinsic viscosity retention," when simply stated, refers to the intrinsic viscosity retention of a re-kneaded product that has been re-kneaded only once.

Another preferable embodiment is one in which the CT content in a re-kneaded product obtained by re-kneading

the polyester resin composition (C) once is 6600 ppm by mass or less. The CT content is more preferably 6400 ppm by mass or less, and even more preferably 6000 ppm by mass or less. The lower limit is not limited. Due to technical difficulties, the lower limit is about 2500 ppm by mass, and is preferably 3000 ppm by mass or more. If the CT content exceeds 6600 ppm by mass, the amount of CT precipitated on the film surface may increase, resulting in an increase in haze, which may be undesirable for some applications, or an apparatus for producing the film may be contaminated with CT, requiring more frequent cleaning. The CT content in the polyester resin composition (C) may be adjusted to equal to or below the above ranges by, for example, using a polyester resin (A) having a small CT content, reducing the CT content in the polyester resin (B), or reducing the CT content in the polyester resin composition (C). The CT content in the polyester resin (B) or the polyester resin composition (C) may be reduced by, for example, performing solid-phase polymerization, or performing heat treatment at 190 to 220°C in a sealed container or under an ethylene glycol-containing air flow.

The value (ΔCT) obtained by subtracting the CT content in a re-kneaded product obtained by re-kneading the polyester resin composition (C) once from the CT content in a re-kneaded product obtained by re-kneading the polyester resin composition (C) three times is preferably 900 ppm by mass or less, more preferably 700 ppm by mass or less, and even more preferably 600 ppm by mass or less. The lower limit is preferably 0 ppm by mass; however, due to technical difficulties, it is about 200 ppm by mass. If ΔCT exceeds 900 ppm by mass, the amount of CT precipitated on the film surface may increase, as described above.

When P-NMR measurement is performed with respect to a polyester resin composition (C) comprising a polyester resin (B) produced by using Irganox 1222 mentioned above as the phosphorus compound, at least one of the nine hindered phenol structures shown in Table 1 is detected. The same applies to cases in which a phosphorus compound comprising a phosphorus element and a hindered phenol structure in the same molecule is used as the polymerization catalyst, instead of Irganox 1222.

Polyester Resin (D)

It terms of the production of a film in the present invention, another preferable embodiment is one in which a polyester film is produced by further adding a polyester resin (D). The composition of the polyester resin (D) may vary according to the film to be produced.

For example, in cases in which a polyethylene terephthalate film is produced, the total amount of the copolymerization components for the polyester resin (D) other than terephthalic acid components and ethylene glycol components is preferably 10 mol% or less, more preferably 7 mol% or less, and particularly preferably 5 mol% or less.

For example, in cases in which a polyester-based heat shrinkable film is produced, the polyester resin (D) is preferably a copolymer polyester or a polyester resin other than polyethylene terephthalate, such that the composition of the polyester resin (D), together with the compositions of the polyester resin (A) and the polyester resin (B), is the final composition of the heat-shrinkable film.

For example, in cases in which a cavity-containing polyester film is produced, the polyester resin (D) may be a polyester in which polyethylene glycol, polytetramethylene glycol, etc. are copolymerized.

The dicarboxylic acid components and the glycol components used for the polyester resin (D) are the same as those described above as examples for the polyester resin (B).

The appropriate range of the intrinsic viscosity of the polyester resin (D) varies according to the film to be produced. The intrinsic viscosity of the polyester resin (D) is preferably 0.50 to 0.90 dl/g, more preferably 0.55 to 0.80 dl/g, and even more preferably 0.58 to 0.75 dl/g.

The catalysts used for the polyester resin (D) are those described above for the polyester resin (A).

The polyester resin (D) preferably has a higher viscosity retention; however, the intrinsic viscosity retention may be 92% or less, may be 91% or less, may further be 90% or less, and may particularly be 89% or less. The viscosity retention of the polyester resin (D) can be increased by, for example, reducing the catalyst amount, deactivating the catalyst, or adding an anti-degradation agent, such as a heat stabilizer. The lower limit of the viscosity retention of the polyester resin (D) is the same as that of the polyester resin (A).

In the production of a film, the addition of colorants, lubricant particles, ultraviolet absorbers, melt resistivity adjusters, antistatic agents, antioxidants, heat stabilizers, and the like is often performed. The polyester resin (D) may be a masterbatch (concentrated resin) of these additives. Examples of lubricant particles include inorganic particles, such as silica, calcium carbonate, talc, and kaolin, and organic particles, such as crosslinked styrene, crosslinked acrylic resin, and melamine resin. The particle size is preferably 10 nm to 5 um, and more preferably 50 nm to 3 um. The particle size can be determined by the Coulter counter method. Examples of melt resistivity adjusters include a combination of a metal compound, such as calcium, magnesium, or potassium, and a phosphorus compound.

To obtain a masterbatch of a melt resistivity adjuster as the polyester resin (D), a combination of a magnesium compound or a calcium compound, or both, and a phosphorus compound, and further optionally an alkali metal compound is preferable so as to lower melt resistivity. In particular, a combination of a magnesium compound, an alkali metal compound, and a phosphorus compound is preferable. A combination of a calcium compound and a phosphorus

compound is also preferable since the reaction of the calcium and phosphorus compounds can form internal particles as a lubricant.

The magnesium compound and the calcium compound for use may be known compounds. Examples include lower fatty acid salts, such as acetates, and alkoxides, such as methoxide. These may be used alone or in a combination of two or more. In particular, magnesium acetate and calcium acetate are preferable.

The amount of the magnesium and calcium elements is preferably 400 to 2700 ppm by mass based on the polyester resin (D). The amount of the magnesium and calcium elements is more preferably 450 to 2500 ppm by mass, and even more preferably 450 to 2000 ppm by mass. The amount of the magnesium and calcium elements here refers to the amount of each element when the magnesium compound or the calcium compound is used singly, or refers to the total amount of both elements when both compounds are used.

Examples of the alkali metal of the alkali metal compound include lithium, sodium, and potassium. Examples of the alkali metal compound include lower fatty acid salts, such as lithium acetate and potassium acetate, and alkoxides, such as potassium methoxide. These may be used alone or in a combination of two or more. The alkali metal is preferably potassium, which has a greater effect of lowering melt resistivity. The alkali metal compound is preferably an acetate, and particularly preferably potassium acetate.

The amount of the alkali metal element is preferably 40 to 270 ppm by mass based on the polyester resin (D). An amount of the alkali metal element of less than 40 ppm by mass requires the addition of a large amount of the polyester resin (D) so as to improve film formability in the film production. An amount of the alkali metal element exceeding 270 ppm by mass is not preferable since heat resistance is reduced, and significant coloring of the film occurs. The amount of the alkali metal element is more preferably 45 to 250 ppm by mass, and even more preferably 45 to 200 ppm by mass.

If the amount of the magnesium metal element, the amount of the calcium metal element, and the amount of the alkali metal element are less than the above ranges, melt resistivity may increase, and the addition of a large amount of the polyester resin (D) may be required to improve film formability in the film production. If the amounts exceed the above ranges, the amount of insoluble foreign matter may increase, and the coloring of the film may increase.

Examples of the phosphorus compound include phosphoric acid, phosphorous acid, hypophosphorous acid, phosphonic acid, phosphinic acid, and ester compounds thereof. Examples include phosphoric acid, trimethyl phosphate, tributyl phosphate, triphenyl phosphate, monomethyl phosphate, dimethyl phosphate, monobutyl phosphate, dibutyl phosphate, phosphorous acid, trimethyl phosphite, tributyl phosphite, methylphosphonic acid, dimethyl methyl phosphonate, dimethyl ethyl phosphonate, dimethyl phenyl phosphonate, diethyl phenyl phosphonate, diphenyl phenyl phosphonate, ethyl diethyl phosphonoacetate, phosphinic acid, methyl phosphinic acid, dimethylphosphinic acid, phenylphosphinic acid, diphenylphosphinic acid, methyl dimethylphosphinate, and methyl diphenylphosphinate. Of these, phosphate triesters with a $C_2$-$C_4$ alkyl group are preferably used. Specific examples include triethyl phosphate, tripropyl phosphate, and tributyl phosphate. These may be used alone or in a combination of two or more. In particular, triethyl phosphate is preferable because triethyl phosphate is believed to form complexes with moderately strong interactions with magnesium and calcium ions, and because a polyester resin having low melt resistivity and excellent color tone with a reduced amount of foreign matter is obtained.

The amount of the phosphorus element is preferably 200 to 4000 ppm by mass based on the polyester resin (D). If the amount of the phosphorus element is less than 200 ppm by mass, the amount of insoluble foreign matter produced may increase. Furthermore, magnesium and calcium that are formed into foreign matter are less effective in lowering melt resistivity and may cause a decrease in heat resistance and stronger coloring of the film. If the amount of the phosphorus element exceeds 4000 ppm by mass, melt resistivity may increase due to the interaction between the excess phosphorus compound and magnesium and calcium ions. Such an amount is thus not preferable. The amount of the phosphorus element is preferably 300 ppm by mass or more, and more preferably 350 ppm by mass or more. Further, the amount of the phosphorus element is more preferably 3500 ppm by mass or less, even more preferably 3000 ppm by mass or less, particularly preferably 2500 ppm by mass or less, and most preferably 2000 ppm by mass or less.

In the polyester resin (D), the molar ratio of the magnesium element, alkali metal element, and phosphorus element preferably satisfies the following formula, in which m represents the amount of the magnesium element (mol%), k represents the amount of the alkali metal element (mol%), and p represents the amount of the phosphorus element (mol%), based on the dicarboxylic acid components, to achieve a greater effect of reducing the amount of foreign matter, reducing coloring, and reducing melt resistivity.

$$1.5 \leq (m+k/2)/p \leq 5$$

The value of (m+k/2)/p is more preferably 1.8 or more, even more preferably 2.0 or more, and particularly preferably 2.3 or more. The value of (m+k/2)/p is more preferably 4 or less, and even more preferably 3.5 or less. k may be 0.

In the polyester resin (D), the molar ratio of the calcium element and the phosphorus element preferably satisfies

the following formula, in which c represents the amount of the calcium element (mol%), and p represents the amount of the phosphorus element (mol%), based on the dicarboxylic acid components, to achieve a greater effect of reducing the amount of foreign matter, reducing coloring, and reducing melt resistivity.

$$0.01 \leq c/p \leq 5$$

The value of c/p is more preferably 0.05 or more and 4.0 or less, and even more preferably 0.1 or more and 3.0 or less.

In the production of the polyester resin (D), it is possible to add the magnesium compound, calcium compound, phosphorus compound, and alkali metal compound during the polymerization of the polyester. The addition is preferably performed during the esterification process or between when the esterification process is completed and when the polymerization process begins, considering that the acid components of the polyester can form a salt with calcium, magnesium, or alkali metal ions to suppress the formation of foreign matter, and that uniform dispersion in the oligomer is possible.

In the production of the polyester resin (D), an antimony compound, an aluminum compound, a germanium compound, a titanium compound, etc. may be used as the polymerization catalyst.

The polyester resin (D) for use may be of two or more different types.

The content of the polyester resin (D) is preferably 90 parts by mass or less, more preferably 80 parts by mass or less, even more preferably 70 parts by mass or less, particularly preferably 60 parts by mass or less, and most preferably 50 parts by mass or less, per 100 parts by mass of the total amount of the polyester resin (A), the polyester resin (B), and the polyester resin (D). If the content exceeds the above ranges, the economic significance or environmental significance of using recovered polyester resin is weakened.

Polyester Resin Composition (E)

A polyester film can be produced by melt-mixing the polyester resin (A) and the polyester resin (B), or the polyester resin composition (C), and further optionally the polyester resin (D), as the starting polyester resin materials in a standard manner.

The polyester resin thus constituting the film is defined as a polyester resin composition (E). When the film is the multilayer polyester film described below, the polyester resin constituting a layer containing the polyester resin (A) and the polyester resin (B) is defined as the polyester resin composition (E).

When the polyester resin (D) is not used, the polyester resin composition (C) serves as the polyester resin composition (E). The composition and the intrinsic viscosity of the polyester resin composition (E) are the same as those described for the polyester resin (D).

The amount of the antimony element in the polyester resin composition (E) is preferably 10 ppm by mass or more, more preferably 15 ppm by mass or more, and even more preferably 20 ppm by mass or more. The amount of the antimony element in the polyester resin composition (E) is preferably 250 ppm by mass or less, more preferably 200 ppm by mass or less, and even more preferably 180 ppm by mass or less. By satisfying the above ranges, a film with less degradation, high transparency, and low haze can be obtained while ensuring economic efficiency.

The amount of the germanium element in the polyester resin composition (E) is preferably 0.1 ppm by mass or more, more preferably 0.15 ppm by mass or more, and even more preferably 0.20 ppm by mass or more. The amount of the germanium element in the polyester resin composition (E) is preferably 5 ppm by mass or less, more preferably 4 ppm by mass or less, and even more preferably 3 ppm by mass or less. By satisfying the above ranges, a film with less degradation can be obtained while ensuring economic efficiency.

The amount of the aluminum element in the polyester resin composition (E) is preferably 1 ppm by mass or more, more preferably 3 ppm by mass or more, and even more preferably 5 ppm by mass or more. The amount of the aluminum element in the polyester resin composition (E) is preferably 20 ppm by mass or less, more preferably 17 ppm by mass or less, and even more preferably 15 ppm by mass or less. By satisfying the above ranges, a film with less degradation can be obtained while ensuring economic efficiency.

The CT content in the polyester resin composition (E) is preferably 6600 ppm by mass or less, more preferably 6400 ppm by mass or less, and even more preferably 6000 ppm by mass or less. The CT content in the polyester resin composition (E) is preferably 3000 ppm by mass or more, and more preferably 4000 ppm by mass or more.

The ratio of the amount of the antimony element to the amount of the aluminum element in the polyester resin composition (E) (Sb amount/Al amount) is preferably 1 or more, more preferably 5 or more, even more preferably 18 or more, and particularly preferably 10 or more. The Sb amount/Al amount in the polyester resin composition (E) is preferably 200 or less, more preferably 170 or less, even more preferably 150 or less, and particularly preferably 130 or less. By satisfying the above ranges, a film with less degradation, high transparency, and low haze can be obtained while ensuring

economic efficiency.

The melt resistivity of the polyester composition (E) is preferably $0.05 \times 10^8$ to $10 \times 10^8$ Ω•cm so as to stably adhere the molten resin onto a cooling roll with static electricity in the film production process. The melt resistivity is more preferably $0.1 \times 10^8$ or more, and is more preferably $5 \times 10^8$ or less, and even more preferably $1 \times 10^8$ or less. The melt resistivity can be adjusted by adjusting the amount or composition of the polyester composition (D) used as a masterbatch of a melt resistivity adjuster. For example, if the polyester resin (A) is derived from PET bottles, a melt resistivity adjuster is typically not contained. Therefore, the amount of the polyester resin (D) may be increased. If the polyester resin (A) is derived from a film recovery material and thus contains a melt resistivity adjuster, the amount of the polyester resin (D) may be reduced. The polyester resin (A) can comprise a phosphorus compound as a catalyst aid or a stabilizer. If such a phosphorus compound functions as a melt resistivity adjuster, the amount of the phosphorus compound in the polyester resin (D) may be reduced.

Specifically, the amount of the magnesium element in the polyester composition (E) is preferably adjusted to 15 to 150 ppm by mass, and more preferably 20 to 120 ppm by mass. The amount of the alkali metal element is preferably adjusted to 1.5 to 15 ppm by mass, and more preferably 2 to 12 ppm by mass. In this case, a calcium compound is not required to be contained. If a calcium compound is contained, the amount of the calcium element is preferably 15 to 350 ppm by mass, and more preferably 20 to 300 ppm by mass. The upper limit may be 250 ppm by mass, 200 ppm by mass, or 150 ppm by mass. In this case, a magnesium compound is not required to be contained. These values are values excluding those derived from lubricant particles, such as calcium carbonate.

The amount of the phosphorus element in the polyester composition (E) also includes the amounts of phosphorus elements derived from the polyester resin (A) and the polyester resin (B). However, these phosphorus elements may be less involved in adjusting melt resistivity; thus, the preferable amount of the phosphorus element in the polyester composition (E) cannot be specified. The amount of the phosphorus element in the polyester composition (E) is preferably within a range that achieves appropriate melt resistivity, in consideration of the amounts of phosphorus elements in the polyester resin (A) and the polyester resin (B). For example, the amount of the phosphorus element in the polyester composition (E) is preferably 10 to 400 ppm by mass, and more preferably 15 to 300 ppm by mass, and the upper limit may be 250 ppm by mass, 200 ppm by mass, or 150 ppm by mass.

The polyester resin composition (E) has an intrinsic viscosity retention of preferably 89% or more, more preferably 90% or more, even more preferably 91% or more, particularly preferably 92% or more, and most preferably 93% or more. The intrinsic viscosity retention of the polyester resin composition (E) is preferably 100%; however, in reality, it is preferably 99% or less, and more preferably 98% or less.

The various characteristics of the polyester resin composition (E) are the same as those described for the polyester resin composition (C).

The film may comprise various additives in addition to the polyester resins according to its applications and required characteristics. In addition to the various additives listed for the polyester resin (D), additives that can be added include resins, such as polyamide, polyimide, polycarbonate, polyurethane, polyether, polyphenylene sulfide, polyphenylene sulfide, polyetherimide, and polyphenylene oxide. For a cavity-containing polyester film, a cavity-forming agent, such as polystyrene or polyolefin, may be added. The amount of these resins added other than polyester is preferably 1 to 30 mass%, and more preferably 2 to 20 mass%, based on the total amount of the polyester resin composition (E) and resins other than the polyester resin composition (E).

Polyester Film

An unstretched polyester film can be obtained by melt-kneading the resin with an extruder and extruding the melt-kneaded resin in a thin film form from a die onto a cooling roll to form a film. An unstretched polyester film can also be obtained by calendaring.

A stretched film can be obtained by stretching the unstretched film obtained as described above in the length direction and/or width direction to thus form a uniaxially or biaxially stretched polyester film.

The stretching in the length direction can be performed, for example, by stretching the film between rolls with different peripheral speeds. The stretching in the width direction can be performed by, for example, holding both ends of the film in the width direction with running clips or the like, guiding it to a tenter, and increasing the width of the running rail of the clips. When sequential biaxial stretching is performed, stretching in either direction may be performed first. Typically, stretching in the length direction is often performed first. The stretching in the length direction and the width direction may also be performed simultaneously or in any order with a simultaneous biaxial stretching machine. The stretching may also be multi-stage stretching. In multi-stage stretching, the stretching may be performed in the length direction and the width direction alternatingly.

The stretching is preferably performed at a temperature in the range of glass transition temperature (Tg) of the polyester resin composition (E) + 5°C to Tg + 70°C, and more preferably in the range of Tg + 10°C to Tg + 60°C. Stretching in at least one direction is preferably performed at a stretching ratio of 10 times or less, more preferably 8 times or less, and

particularly preferably 6 times or less. To impart a strong orientation, the stretching ratio is preferably 2 times or more, more preferably 2.5 times or more, and particularly preferably 2.8 times or more. To obtain a film having a high degree of uniaxial properties by biaxially stretching, the stretching ratio in the direction perpendicular to the main stretching direction may be equal to or less than the above ranges.

After stretching, the polyester film is preferably subjected to heat fixation at a temperature equal to or below the crystalline melting point (mp) of the polyester resin composition (E). The heat fixation temperature is preferably a temperature equal to or lower than mp - 10°C, and more preferably a temperature equal to or lower than mp - 20°C. The lower limit of the heat fixation temperature depends on the composition of the polyester resin composition (E) and heat resistance desired to be imparted to the film. Typically, the lower limit is preferably 100°C or higher, and more preferably 130°C or higher. For example, if the polyester resin composition (E) is for a polyethylene terephthalate film, the heat fixation temperature is preferably 170 to 250°C, and more preferably 180 to 240°C.

The heat fixation is preferably performed while maintaining the stretching ratio. However, in order to reduce thermal shrinkage of the polyester film, a relaxation step in which the film in a stretched state is relaxed by about 1 to 5% may be added after heat fixation and before cooling. The relaxation step is preferably performed at 100°C to the heat fixation temperature - 5°C, and more preferably 120°C to the heat fixation temperature - 10°C. The relaxation rate is more preferably 1.5 to 4%.

The polyester film may be a single-layer film or a multilayer film. When the film is a multilayer film, at least one layer must be formed of the polyester resin composition (E). Two or more layers or all of the layers may also be formed of the polyester resin composition (E). In this case, the compositions or the ratio of the polyester resin (A), the polyester resin (B), and the polyester resin (D) may vary by layer.

It is also preferable that the multilayer film has three or more layers, with the intermediate layer being a layer of the polyester resin composition (E), and the outermost layer(s) not containing the recovered polyester resin A, in particular, the polyester resin A collected from a town.

In a multilayer film, the thickness of the layer of the polyester resin composition (E) is preferably 30% or more, more preferably 50% or more, even more preferably 60% or more, and particularly preferably 70% or more of the total film thickness. If the thickness is less than the above ranges, the significance of using the recovered polyester (A) is reduced.

The thickness of the polyester film is preferably 1 to 2000 μm, and more preferably 2 to 1000 um. The thickness can be adjusted to be in an appropriate range according to its applications. For example, for optical applications, the thickness is typically 20 to 150 um. For transfer films or release films, the thickness is typically 10 to 100 um. For general-purpose packaging films, the thickness is typically 5 to 50 um. For thicker products, such as trays, the thickness is typically 200 to 1000 μm.

Surface Treatment of Polyester Film

The polyester film is preferably surface-treated to increase adhesiveness to adhesives, coating materials, inks, etc. Examples of surface treatments include corona treatment, plasma treatment, and flame treatment.

The polyester film may be provided with an easy-to-adhere layer.

The resin for use in the easy-to-adhere layer includes polyester resin, polyurethane resin, polycarbonate resin, and acrylic resin; and the resin is preferably polyester resin, polyester polyurethane resin, polycarbonate polyurethane resin, and acrylic resin. The easy-to-adhere layer is preferably crosslinked. Crosslinking agents include isocyanate compounds, melamine compounds, epoxy resin, and oxazoline compounds. The addition of a water-soluble resin, such as polyvinyl alcohol, is also a useful means for improving adhesiveness of the film to the polarizing element.

The easy-to-adhere layer can be formed by applying an aqueous coating composition containing these resins and optionally crosslinking agents, particles, and the like to the polyester film and drying it. Examples of the particles include those described above for use in the polyester film.

The easy-to-adhere layer may be formed off-line on a stretched film, but is preferably formed in-line during the film-forming step. In the case of in-line formation, the coating may be applied either before longitudinal stretching or before transverse stretching; however, it is preferred that a coating composition be applied immediately before transverse stretching and dried and cross-linked in preheating, heating, and heat treatment steps using a tenter. When in-line coating is performed with rolls immediately before longitudinal stretching, it is preferred that the film be dried with a vertical dryer after coating, and then guided to stretching rolls.

The coating amount of the easy-to-adhere layer is preferably 0.01 to 1.0 $g/m^2$, and more preferably 0.03 to 0.5 $g/m^2$.

The polyester film produced according to the present invention can be used for various applications, without limitation. Examples include substrate films for prism and lens sheets, hard coating films, electrode substrate films for touch panels, scattering prevention films, anti-reflective films, polarizing element-protection films, polarizer protection films, surface protection films for display devices, circuits, etc., release films for ceramic green sheets etc., polarizer release films, transfer films, in-mold transfer films, in-mold molding films, aluminum or inorganic oxide deposition barrier

films, solar cell backsheets, circuit substrate films, flat cable substrate films, magnetic recording media substrate films, ink ribbons, image-receiving films, films for labels, tags, and cards, films for packaging bags, heat-shrinkable films, trays, and cover tapes.

Depending on the applications, additives can be added to be contained in the film, or post-processing can be performed to impart functions to the film.

Method for Producing Polyester Resin (B)

Next, a method for producing the polyester resin (B) is described. The polyester resin (B) can be produced by a method comprising known steps, except that a polyester polymerization catalyst comprising an aluminum compound and a phosphorus compound is used as a catalyst. The polymerization catalyst is preferably added in a manner satisfying the following (4) and (5), and more preferably in a manner further satisfying the following (6) in addition to (4) and (5). Preferred numerical ranges of the following (4) to (6) are as described above.

(4) The polyester resin (B) has an aluminum element content of 5 to 50 ppm by mass.
(5) The polyester resin (B) has a phosphorus element content of 5 to 1000 ppm by mass.
(6) The residual molar ratio of the phosphorus element to the aluminum element in the polyester resin (B) is 1.00 or more and 5.00 or less.

The polyester resin (B) is preferably produced by a method comprising a first step of synthesizing a polyester or an oligomer thereof, i.e., a polycondensation product (a lower condensation product), as an intermediate, and a second step of further subjecting the intermediate to polycondensation.

It is preferable to add a solution S in which an aluminum compound is dissolved and a solution T in which a phosphorus compound is dissolved to the intermediate after the first step and before the second step in a manner satisfying (7) to (9) below. The polycarboxylic acid and an ester-forming derivative thereof used in the production of the polyester resin (B), a hydroxycarboxylic acid and an ester-forming derivative, which may be added in small amounts, and a cyclic ester, which may be added in a small amount, are not distilled off from the reaction system during polymerization, and almost 100% of the amounts thereof initially added to the system and used as a catalyst remain in the polyester resin (B) produced by polymerization. Therefore, the mass of the polyester resin to be produced can be calculated from the amounts thereof used for the production.

(7) The amount of the aluminum element added with respect to the polyester resin (B) to be produced is 5 to 50 ppm by mass (more preferably 7 to 40 ppm by mass, even more preferably 10 to 30 ppm by mass, and particularly preferably 15 to 25 ppm by mass).
(8) The amount of the phosphorus element added with respect to the polyester resin (B) to be produced is 5 to 1500 ppm by mass (more preferably 10 to 500 ppm by mass, even more preferably 20 to 200 ppm by mass, and particularly preferably 30 to 100 ppm by mass).
(9) The molar ratio of the amount of the phosphorus element added in (8) above to the amount of the aluminum element added in (7) above (referred to below as "the added molar ratio of the phosphorus element to the aluminum element") is 1.00 or more and 7.00 or less (more preferably 1.50 to 6.00, and even more preferably 2.00 to 5.00).

The method for producing the polyester or an oligomer thereof, i.e., a lower condensation product (lower polymer), synthesized in the first step, is not particularly limited.

The polyester resin (B) can be produced by a method comprising conventionally known steps, except that a polyester polymerization catalyst comprising an aluminum compound and a phosphorus compound is used as a catalyst, and that the amount of the polyester polymerization catalyst added is taken into consideration. For example, in a case of producing polyethylene terephthalate, a direct esterification method is performed in which esterification is performed by directly reacting terephthalic acid, ethylene glycol, and optionally other copolymerization components, and distilling off water, followed by polycondensation under normal or reduced pressure; or a transesterification method is performed in which ester exchange is performed by reacting dimethyl terephthalate, ethylene glycol, and optionally other copolymerization components, and distilling off methyl alcohol, followed by polycondensation under normal or reduced pressure. Additionally, solid-phase polymerization may be further performed to increase the intrinsic viscosity, if necessary. The amount (mass) of the polyester resin (B) to be produced can be calculated from the amount (mass) of the polycarboxylic acids, including dicarboxylic acids etc., used as starting materials.

In either of these methods, the esterification reaction or transesterification reaction may be performed in a single stage or in multiple stages.

Further, the polyester resin produced by melt polymerization may be additionally polymerized by solid-phase polymerization. The solid-phase polymerization reaction can be performed with a continuous-type apparatus as in the melt

polycondensation reaction.

When a continuous polycondensation apparatus equipped with three or more reactors (a three-stage polymerization method with an initial stage, a middle stage, and a late stage) is used, the first stage is defined as the initial stage, the final stage is defined as the late stage, and the second stage to a stage that is one stage before the final stage is defined as the middle stage. The reaction conditions for the polymerization reaction in the middle stage are preferably conditions between the reaction conditions in the initial stage and those in the final stage. The degree of increase in the intrinsic viscosity achieved in each of these polymerization reaction steps is preferably smoothly distributed.

Solid-phase Polymerization

The polyester resin produced by melt polymerization may be subjected to solid-phase polymerization so as to increase the intrinsic viscosity. The solid-phase polymerization may be batch or continuous. The solid-phase polymerization is preferably performed with a continuous-type apparatus as in the melt polymerization.

The polyester resin produced by melt polymerization is preferably additionally polymerized by solid-phase polymerization so as to reduce the CT content in the polyester resin (B). The solid-phase polymerization is performed after forming the polyester obtained in the second step (melt polymerization) described above into a granular material. The granular material refers to a polyester in the form of chips, pellets, flakes, or powder, and preferably chips or pellets.

The solid-phase polymerization is performed by heating the polyester in a granular form under inert gas flow or under reduced pressure at a temperature equal to or below the melting point of the polyester. The solid-phase polymerization may be performed in a single stage or in multiple stages.

The polyester in a granular form supplied to the solid-phase polymerization step may be pre-crystallized in advance by heating to a temperature lower than the temperature at which solid-phase polymerization is performed before being supplied to the solid-phase polymerization step.

The pre-crystallization step may also be performed by heating the polyester in a granular form in a dry state to a temperature of usually 120 to 200°C, preferably 130 to 180°C, for 1 minute to 4 hours, or by heating the polyester in a granular form under water vapor atmosphere, water-vapor-containing inert gas atmosphere, or water-vapor-containing air atmosphere at a temperature of usually 120 to 200°C for 1 minute or more.

The polyester obtained by melt polymerization as described above is, for example, formed into chips and then transported through transportation pipes to a storage silo or to a solid-phase polymerization step. Here, if the chips are transported by, for example, a forcible low-density transportation method using air, a large impact force is applied to the surfaces of the chips of the polyester obtained by melt polymerization due to collision with the pipes, which results in the formation of a large amount of fine particles and film-like materials. These fine particles and film-like materials have an effect of promoting the crystallization of polyester, and when present in a large amount, the transparency of the resulting molded article becomes very poor. Therefore, in a preferable embodiment, the step of removing such fine particles and film-like materials may be added.

The method for removing the fine particles and film-like materials is not limited. For example, the fine particles and film-like materials may be removed by a method comprising a vibration sieving step, an airflow classification step, a gravity classification step, and the like, which are separately provided in a middle step between the solid-phase polymerization step and the late step provided after the solid-phase polymerization step.

When an aluminum compound and a phosphorus compound are used as a catalyst, they are preferably added in a slurry or solution form, more preferably in a solution form dissolved in a solvent, such as water or glycol, even more preferably in a solution form dissolved in water and/or glycol, and most preferably in a solution form dissolved in ethylene glycol.

It is preferable to add a solution S in which an aluminum compound is dissolved and a solution T in which a phosphorus compound is dissolved at any stage before the start of the polymerization reaction in the production step of the polyester resin (B), such that each content (residual amount) in the polyester resin (B) is in the ranges satisfying (4) to (6) above.

By adding the solution S in which an aluminum compound is dissolved and the solution T in which a phosphorus compound is dissolved such that each content (residual amount) in the polyester resin (B) satisfies (4) to (6) above, a complex with catalytic activity is functionally formed in the polymerization system to achieve sufficient polymerization activity. Additionally, the formation of aluminum-based foreign matter can also be suppressed.

The aluminum atoms in the aluminum compound functioning as a catalyst will remain in the polyester resin (B) produced by polymerization at almost 100% of the amount for use initially added to the system as a catalyst, even when placed in a reduced-pressure environment during the polymerization of the polyester resin. Specifically, if the amount of aluminum atoms added to the intermediate is 5 to 50 ppm by mass, the aluminum atom content in the polyester resin (B) will also be 5 to 50 ppm by mass since the amount of the aluminum compound is almost unchanged between before and after the polymerization.

Further, when the phosphorus compound, which functions as a catalyst together with the aluminum compound, is

placed in a reduced-pressure environment during the polymerization of the polyester resin, a portion (about 10 to 40%) of the amount for use initially added to the system as a catalyst will be removed from the system. The percentage of the removal varies depending on, for example, the added molar ratio of phosphorus atoms to aluminum atoms, the basicity or acidity of the solution in which an aluminum compound is dissolved and the solution in which a phosphorus compound is dissolved to be added, and the method for adding the aluminum-containing solution and the phosphorus-containing solution (whether they are added as a single liquid or added separately). Therefore, the amount of the phosphorus compound added is preferably appropriately set so as to satisfy (5) above in the polyester resin (B), which is the final product.

The solution S in which an aluminum compound is dissolved and the solution T in which a phosphorus compound is dissolved are preferably added simultaneously. In a more preferable embodiment, a liquid mixture is prepared in advance by mixing the solution S in which an aluminum compound is dissolved and the solution T in which a phosphorus compound is dissolved in the ratio used for the addition to the intermediate, and then the liquid mixture in a single liquid form is added to the intermediate. Examples of the method for forming the solutions in a single liquid form include a method in which the solutions are mixed in a tank, and a method in which pipes for adding the catalysts are merged in the middle to allow them to be mixed.

When adding the solutions to a reaction vessel, the stirring rate in the reaction vessel is preferably increased. When adding the catalyst solutions to the piping between reaction vessels, an in-line mixer or the like is preferably provided to allow the added catalyst solutions to be quickly and uniformly mixed.

If the solution S in which an aluminum compound is dissolved and the solution T in which a phosphorus compound is dissolved are added separately, a large amount of foreign matter is likely to be generated due to the aluminum compound, and in some cases, the heating crystallization temperature may decrease, the cooling crystallization temperature may increase, and catalytic activity may become insufficient. If the aluminum compound and the phosphorus compound are simultaneously added, a complex of the aluminum compound and the phosphorus compound that has polymerization activity will be quickly formed without waste. However, if the aluminum compound and the phosphorus compound are added separately, the formation of a complex of the aluminum compound and the phosphorus compound will be insufficient, and an aluminum compound that fails to form a complex with the phosphorus compound may be deposited as foreign matter.

The solution S in which an aluminum compound is dissolved and the solution T in which a phosphorus compound is dissolved are preferably added before the start of the polymerization reaction and after the completion of the esterification reaction or transesterification reaction, and more preferably added to the intermediate after the first step and before the second step. If the addition is performed before the completion of the esterification reaction or transesterification reaction, the amount of aluminum-based foreign matter may increase.

When the polyester resin (B) comprises at least one member selected from a polycarboxylic acid and an ester-forming derivative thereof and at least one member selected from a polyhydric alcohol and an ester-forming derivative thereof, the solution S in which an aluminum compound is dissolved is preferably a glycol solution in which an aluminum compound is dissolved, and the solution T in which a phosphorus compound is dissolved is preferably a glycol solution in which a phosphorus compound is dissolved.

## Heat Treatment of Phosphorus Compound

The phosphorus compound used in the production of the polyester resin (B) is preferably one that is heat-treated in a solvent. The solvent for use is not limited as long as it is at least one member selected from the group consisting of water and an alkylene glycol. The alkylene glycol for use as a solvent is preferably one that dissolves a phosphorus compound. It is more preferable to use a glycol that is a constituent component of the polyester resin (B), such as ethylene glycol. The heat treatment in a solvent is preferably performed after dissolving the phosphorus compound; however, complete dissolution is not necessary.

The conditions for the heat treatment are preferably such that the heat treatment temperature is 170 to 196°C, more preferably 175 to 185°C, and even more preferably 175 to 180°C, and that the heat treatment time is preferably 30 to 240 minutes, and more preferably 50 to 210 minutes.

The concentration of the phosphorus compound during the heat treatment is preferably 3 to 10 mass%.

The heat treatment described above makes it possible to keep the acidity of the phosphorus compound contained in the glycol solution constant, improve polymerization activity achieved by a combined use with an aluminum compound, reduce the formation of aluminum-based foreign matter caused by the polymerization catalyst, and reduce the amount of the phosphorus compound distilled off in the polymerization step, leading to improvement in economic efficiency. Accordingly, the heat treatment above is preferably performed.

## Examples

The present invention is described below with reference to Examples. However, the present invention is not limited to these Examples. In the Examples and Comparative Examples, the following evaluation methods were used.

## Evaluation Methods

### (1) Intrinsic Viscosity (IV)

About 3 g of a sample was frozen and crushed, and then dried at 140°C for 15 minutes. Subsequently, 0.20 g of the resulting product was weighed and completely dissolved by stirring at 100°C for 60 minutes in 20 ml of a mixed solvent obtained by mixing 1,1,2,2-tetrachloroethane and p-chlorophenol at 1:3 (mass ratio). The resulting solution was cooled to room temperature and then passed through a glass filter to obtain a sample. The drop time of the sample and the solvent was measured with an Ubbelohde viscometer (produced by Rigo Co., Ltd.) whose temperature was adjusted to 30°C, and the intrinsic viscosity [η] was calculated according to the following formula.

$$[\eta] = (-1+\sqrt{(1+4K'\eta Sp)})/2K'C$$

$$\eta Sp = (\tau-\tau 0)\tau 0$$

In the formulas,

[η]: Intrinsic viscosity (dl/g)
ηSp: Specific viscosity (-)
K': Huggins constant (= 0.33)
C: Concentration (= 1 g/dl)
τ: Drop time of the sample (sec)
τ0: Drop time of the solvent (sec)

### (2) Content of Specific Metal Element in Polyester Resin

The polyester resin described below was weighed in a platinum crucible, carbonized on an electric stove, and then converted into ashes in a muffle furnace at 550°C for 8 hours. The ashed sample was dissolved in 1.2 M hydrochloric acid to prepare a sample solution. The prepared sample solution was subjected to measurement under the following conditions, and the concentrations of the antimony element, germanium element, titanium element, and aluminum element in the polyester resin were determined by high-frequency inductively coupled plasma emission spectrometry.

Apparatus: CIROS-120, produced by SPECTRO
Plasma output: 1400 W
Plasma gas: 13.0 L/min
Auxiliary gas: 2.0 L/min
Nebulizer: Crossflow nebulizer
Chamber: Cyclone chamber
Measurement wavelength: 167.078 nm

### (3) Phosphorus Element Content in Polyester Resin

The polyester resin was subjected to wet decomposition with sulfuric acid, nitric acid, and perchloric acid, and then neutralized with aqueous ammonia. After ammonium molybdate and hydrazine sulfate were added to the prepared solution, the absorbance at a wavelength of 830 nm was measured with a UV-visible absorption spectrophotometer (UV-1700, produced by Shimadzu Corporation). The concentration of the phosphorus element in the polyester resin was determined from the previously prepared calibration curve.

### (4) Amount of Aluminum-based Foreign Matter in Polyester Resin

The polyester resin (30 g) and 250 mL of a mixed solution of p-chlorophenol/tetrachloroethane (mass ratio: 3/1) were placed in a 500 mL Erlenmeyer flask equipped with a stirrer, and heated for dissolution with a hot stirrer at 100 to

105°C for 1.5 hours. The resulting solution was filtered through a polytetrafluoroethylene membrane filter with a diameter of 47 mm and pore size of 1.0 um (PTFE membrane filter, product name: T100A047A, produced by Advantec) to separate foreign matter. The effective filtration diameter was 37.5 mm. After filtration was completed, washing was performed with 50 mL of chloroform, and the filter was then dried.

The amount of the aluminum element on the filtration surface of the membrane filter was quantified with a scanning X-ray fluorescence analyzer (ZSX100e, Rh tubular lamp: 4.0 kW, produced by Rigaku Corporation). The quantification was performed with respect to a 30 mm diameter central portion of the membrane filter. The calibration curve for the X-ray fluorescence analysis was obtained by using polyethylene terephthalate resin, whose aluminum element content was known, and the apparent aluminum element amount was expressed in ppm. The measurement was performed by measuring the intensity of A1-Kα rays at an X-ray output of 50 kV at 70 mA by using pentaerythritol as an analyzing crystal and PC (proportional counter) as a detector under the conditions of a PHA (pulse-height analyzer) of 100-300. The amount of the aluminum element in the polyethylene terephthalate resin for preparing a calibration curve was quantified by high-frequency inductively coupled plasma emission spectrometry.

(5) Confirmation of the Presence of Hindered Phenol Structure or Degraded Residue Thereof in Sample

A sample (420 mg) was dissolved in 2.7 mL of a mixed solvent obtained by mixing hexafluoroisopropanol and deuterated benzene at 1:1 (mass ratio), 10 μL of a deuterated acetone solution containing 25% of phosphoric acid was added thereto, and the mixture was centrifuged. Subsequently, 100 to 150 mg of trifluoroacetic acid was added to the supernatant liquid, and the mixture was immediately subjected to P-NMR measurement under the following conditions.

Apparatus: Fourier transform nuclear magnetic resonance spectroscopy (AVANCE 500, produced by BRUKER)
31P resonance frequency: 202.456 MHz
Locking solvent: deuterated benzene
Flip angle of detection pulse: 65°
Data acquisition time: 1.5 sec
Delay time: 0.5 sec
Proton decoupling: full decoupling
Measuring temperature: 25 to 35°C
Cumulative number: about 20000 to 30000

The peak wavelengths of the residues of the chemical numbers listed in Table 1 are shown below. When these peak wavelengths were detected, the sample was determined to have a hindered phenol structure.

Chemical formula 1: 34.5 ppm, Chemical formula 4: 30.5 ppm, Chemical formula 7: 53.6 ppm
Chemical formula 2: 33.8 ppm, Chemical formula 5: 30.1 ppm, Chemical formula 8: 53.0 ppm
Chemical formula 3: 31.9 ppm, Chemical formula 6: 28.7 ppm, Chemical formula 9: 51.3 ppm

(6) Quantification of Cyclic Trimer

A sample was frozen and crushed or cut into small pieces, and 100 mg of the sample was weighed accurately. The weighed sample was dissolved in 3 mL of a liquid mixture of hexafluoroisopropanol/chloroform (volume ratio: 2/3) and further diluted by adding 20 mL of chloroform. Then, 10 mL of methanol was added to the resulting product to precipitate the polymer, followed by filtration. The filtrate was evaporated to dryness, and the volume was adjusted to 10 mL with dimethylformamide. Subsequently, the cyclic trimer content in the polyester resin or the hollow molded article was quantified by high-performance liquid chromatography as described below. The above operation was performed five times, and the average value was defined as the CT content.

Apparatus: L-7000 (produced by Hitachi, Ltd.)
Column: μ-Bondasphere C18, 5 μ, 100 Å, 3.9 mm × 15 cm (produced by Waters)
Solvent: Eluent A: 2% acetic acid/water (v/v)
Eluent B: Acetonitrile
Gradient B%: 10 → 100% (0 → 55 min)
Flow rate: 0.8 mL/min
Temperature: 30°C
Detector: UV: 259 nm

(7) Intrinsic Viscosity Retention of Sample

A sample was vacuum dried at 140°C for 16 hours so that the moisture content was 150 ppm or less. If the sample was in the form of a film, the film was cut into squares of about 1 cm, and if the sample was in the form of resin pellets, the sample was used as is. The dried polyester was re-kneaded once with a twin-screw extruder under the following conditions, and the intrinsic viscosity of the re-kneaded product was measured to calculate the intrinsic viscosity retention according to the formula below. Further, the dried polyester resin was re-kneaded three times with a twin-screw extruder under the following conditions, and the intrinsic viscosity of the re-kneaded product was measured to calculate the intrinsic viscosity retention according to the formula below. The measurement method for intrinsic viscosity was described in (1) above.

Twin-screw extruder: KZW15TW-45/60MG-NH (-2200), produced by Technobell
Set temperature: 260°C (actual temperature: 268 to 270°C)
Screw rotation speed: 200 rpm
Discharge amount: 1.7 to 2.0 kg/h
Intrinsic viscosity retention (%) = 100 × intrinsic viscosity of re-kneaded product/intrinsic viscosity of sample

The moisture content was measured by using 0.6 g of the sample with a Karl Fischer moisture titrator (CA-200, produced by Mitsubishi Chemical Analytech Co., Ltd.) based on coulometric titration at 230°C for 5 minutes under nitrogen flow at a rate of 250 mL/min.

(8) Composition Analysis of Polyester Resin

The polyester resin (20 mg) was dissolved in 0.6 ml of a mixed solvent obtained by mixing deuterated hexafluoroisopropanol and deuterated chloroform at 1:9 (volume ratio), followed by centrifugation. The supernatant liquid was then collected and subjected to H-NMR measurement under the following conditions.

Apparatus: Fourier transform nuclear magnetic resonance spectroscopy (AVANCE NEO600, produced by BRUKER)
1H resonance frequency: 600.13 MHz
Locking solvent: Deuterated chloroform
Flip angle: 30°
Data acquisition time: 4 sec
Delay time: 1 sec
Measuring temperature: 30°C
Cumulative number: 128

Below, the preparation of an aluminum-containing ethylene glycol solution and a phosphorus-containing ethylene glycol solution is described.

Preparation of Aluminum-containing Ethylene Glycol Solution s

A 20 g/L aqueous solution of basic aluminum acetate and an equal volume (volume ratio) of ethylene glycol were placed together in a mixing tank. After the mixture was stirred at room temperature (23°C) for several hours, water was distilled off from the system while stirring was performed at 50 to 90°C for several hours under reduced pressure (3 kPa) to thus prepare an aluminum-containing ethylene glycol solution s containing 20 g/L of an aluminum compound.

Preparation of Phosphorus-containing Ethylene Glycol Solution t Irganox 1222 (produced by BASF) as a phosphorus compound was placed in a mixing tank, together with ethylene glycol. Then, heat treatment was performed at 175°C for 150 minutes with stirring under nitrogen replacement to thus prepare a phosphorus-containing ethylene glycol solution t containing 50 g/L of a phosphorus compound.

Production of Polyester Resin

Polyester Resin (B1)

A polyester oligomer with an esterification ratio of about 95% that was previously prepared by using high-purity terephthalic acid and ethylene glycol, and high-purity terephthalic acid were placed in a 10 L stainless steel autoclave with a stirrer, and an esterification reaction was performed at 260°C to obtain an oligomer mixture. The obtained oligomer mixture had an acid end group concentration of 750 eq/ton and a hydroxyl end group percentage (OH%) of 59 mol%.

A liquid mixture in which the aluminum-containing ethylene glycol solution s and the phosphorus-containing ethylene glycol solution t prepared as described above were mixed so as to be in the form of a single liquid was added to the obtained oligomer mixture. The liquid mixture was produced such that the aluminum element and the phosphorus element were respectively 21 ppm by mass and 58 ppm by mass, based on the mass of the oligomer mixture. The added molar ratio of phosphorus element to aluminum element was 2.41. The amount of the polyester resin to be produced can be calculated from the amount of terephthalic acid added. In this Example, the liquid mixture was added so that the aluminum element and phosphorus element were respectively 21 ppm by mass and 58 ppm by mass based on the polyester resin to be produced.

The temperature of the system was then increased to 280°C over 1 hour, during which the pressure in the system was gradually reduced to 0.15 kPa. Under such conditions, a polycondensation reaction was performed to obtain a polyester resin having an IV of 0.60 dl/g. The obtained polyester resin was then extruded into a strand form and cut into pellets of 2.5 × 3 × 4 mm. The pellets were then subjected to solid-phase polymerization for 7 hours under reduced pressure at 230°C with a batch-type solid-phase polymerization apparatus to obtain a polyester resin (B1) having an intrinsic viscosity of 0.75 dl/g and a CT content of 4700 ppm by mass. The residual amount of the aluminum element in the polyester resin (B1) was 21 ppm by mass, the residual amount of the phosphorus element was 45 ppm by mass, and the residual molar ratio of the phosphorus element to the aluminum element was 1.87. The aluminum element content corresponding to aluminum-based foreign matter in the polyester resin (B1) was 710 ppm by mass, and the L value of the polyester resin (B-1) was 58.7, indicating that the polyester resin (B1) had a hindered phenol structure. The amount of DEG was 1.5 mol%. The intrinsic viscosity retention was 98% when re-kneading was performed once and 88% when re-kneading was performed three times.

Polyester Resin (B2)

A polyester resin (B2) having an intrinsic viscosity of 0.75 dl/g and a CT content of 4700 ppm by mass was obtained in the same manner as for the polyester resin (B1), except that the amounts of the aluminum element and the phosphorus element added were changed. The residual amount of the aluminum element in the polyester resin (B2) was 16 ppm by mass, the residual amount of the phosphorus element was 26 ppm by mass, and the residual molar ratio of the phosphorus element to the aluminum element was 1.42. The aluminum element content corresponding to aluminum-based foreign matter in the polyester resin (B2) was 2000 ppm by mass, and the L value of the polyester resin (B2) was 58.5, indicating that the polyester resin (B2) had a hindered phenol structure. The intrinsic viscosity retention was 97% when re-kneading was performed once and 87% when re-kneading was performed three times.

Polyester Resin (B3)

A polyester resin (B3) having an intrinsic viscosity of 0.75 dl/g and a CT content of 4700 ppm by mass was obtained in the same manner as for the polyester resin (B1), except that the amounts of the aluminum element and the phosphorus element added were changed. The residual amount of the aluminum element in the polyester resin (B3) was 10 ppm by mass, the residual amount of the phosphorus element was 16 ppm by mass, and the residual molar ratio of the phosphorus element to the aluminum element was 1.39. The aluminum element content corresponding to aluminum-based foreign matter in the polyester resin (B3) was 2300 ppm by mass, and the L value of the polyester resin (B3) was 56.6, indicating that the polyester resin (B3) had a hindered phenol structure. The intrinsic viscosity retention was 96% when re-kneading was performed once and 86% when re-kneading was performed three times.

Polyester Resin (B4)

The polyester resin (B1) and silica particles with an average particle size of 2.5 um were fed to a twin-screw extruder and kneaded at 285°C to produce masterbatch pellets containing 10000 ppm of silica particles.

Polyester Resin (D1)

Pellets of polyethylene terephthalate obtained by using antimony trioxide as a catalyst (antimony element content: 230 ppm by mass, phosphorus element content: 50 ppm by mass, intrinsic viscosity: 0.75 dl/g)

Polyester Resin (D2)

The polyester resin (D1) and silica particles with an average particle size of 2.5 μm were fed to a twin-screw extruder and kneaded at 285°C to produce masterbatch pellets containing 6000 ppm of silica particles.

Polyester Resin (D3)

Basic aluminum acetate, magnesium acetate dihydrate, potassium acetate, and triethyl phosphate were added to an oligomer prepared from terephthalic acid and ethylene glycol in a standard manner so that the aluminum element was 60 ppm, the magnesium element was 1000 ppm, the potassium element was 100 ppm, and the phosphorus element was 500 ppm based on the polyester resin after production. The temperature of the system was then increased to 280°C over 1 hour, during which the pressure in the system was gradually reduced to 0.15 kPa. Under such conditions, a polycondensation reaction was performed for 80 minutes to obtain pellets of a polyester resin (D3). The polyester resin (D3) had an intrinsic viscosity of 0.67 dl/g.

The amounts of the aluminum element, magnesium element, potassium element, and phosphorus element in the polyester resin (D3) were determined according to the following method.

Determination of Amount of Each Element in Polyester Resin (D3)

The polyester resin was heated and melted at 280°C in a stainless steel circular ring with a thickness of 5 mm and an inner diameter of 50 mm to prepare a sample piece, and the amounts of elements were determined by fluorescent X-ray analysis and expressed in ppm (on a mass basis). For quantification, calibration curves obtained in advance from samples with known amounts of each element were used.

Recovered Polyester Resin

Polyester Resin (A1)

Recovered polyester resin flakes provided by Kyoei Sangyo Co., Ltd., were used as a polyester resin (A1). The results of composition analysis showed that the recovered polyester resin flakes contained 1.7 mol% of isophthalic acid components and 2.1 mol% of diethylene glycol components, and had a CT content of 4900 ppm. The flake size was 8.6 mm. The recovered polyester resin flakes had an intrinsic viscosity of 0.750 dl/g. Further, the recovered polyester resin flakes had an antimony element content of 190 ppm by mass, and a germanium element content of 1.6 ppm by mass. Since the titanium element content was as very small as 1 ppm by mass or less, the titanium element content is omitted in Tables 2 and 3. From the contents of antimony, germanium, and titanium elements, the recovered polyester resin flakes were proved to be mainly from a hollow molded article comprising polyester resin produced with an antimony catalyst. The polyester resin A1 had an IV retention of 88% when re-kneading was performed once and 77% when re-kneading was performed three times.

Examples, Comparative Examples, and Reference Example

The polyester resins in the blending ratios (parts by mass) shown in Table 2 were fed to a single-screw extruder and melted at 290°C. The molten polymers were each filtered through a sintered stainless steel filter material (nominal filtration accuracy: 95% of 20 um particles were cut off) and extruded from a die into a sheet form onto a casting drum with a surface temperature of 30°C, followed by cooling and solidification to produce a unstretched film. When feeding, the polyester resins were mixed little by little and fed into the hopper so as to avoid segregation.

The unstretched film was stretched 3.3 times in the longitudinal direction at 95°C using rolls with different peripheral speeds.

The uniaxially stretched film was then guided to a tenter stretching machine. With the end portions of the film held with clips, the film was guided to a hot-air zone with a temperature of 125°C, and stretched 3.5 times in the width direction. Subsequently, while the width of the film stretched in the width direction was maintained, the film was subjected to heat fixation treatment at a temperature of 220°C for 10 seconds, and further subjected to 3.0% relaxation. The film was then cooled to 120°C, and both end portions (selvages) of the film were cut with a shear blade to thereby obtain a biaxially stretched PET film with a film thickness of 75 $\mu$m. The film was wound around a paper tube.

Evaluation of Film Recovery and Reusability

The films produced in the Example and the Comparative Examples, and the collected selvages were cut, and the cut film pieces were fed to a twin-screw extruder for melt-kneading at 290°C to produce pellets. The produced pellets were then melt-kneaded again at 290°C to produce pellets.

The pellets obtained for the second time were used to produce a film in the same manner, and the film was wound around a paper tube to produce a re-melted resin film.

The sides of the rolled films were observed, and the difference in color tone was observed.

A: No difference was perceived in color tone.
B: The re-melted resin film was slightly more yellowish.
C: The re-melted resin film was clearly more yellowish.

Table 2

| | Ex. 1 | Ex. 2 | Ex. 3 | Ex. 4 | Ex. 5 | Ex. 6 | Comp. Ex. 1 | Ex. 7 | Ex. 8 | Ex. 9 | Ex. 10 | Ex. 11 | Comp. Ex. 2 | Ref. Ex. |
|---|---|---|---|---|---|---|---|---|---|---|---|---|---|---|
| A1 (Sb: 190 ppm, Ge: 1.6 ppm) | 10 | 30 | 50 | 70 | 90 | 95 | 95 | 50 | 50 | 70 | 95 | 50 | 50 | 0 |
| B1 (Al: 21 ppm, P: 45 ppm) | 85 | 65 | 45 | 25 | 5 | 0 | 0 | 45 | 0 | 25 | 0 | 0 | 0 | 0 |
| B2 (Al: 16 ppm, P: 26 ppm) | 0 | 0 | 0 | 0 | 0 | 0 | 0 | 0 | 45 | 0 | 0 | 0 | 0 | 0 |
| B3 (Al: 10 ppm, P: 16 ppm) | 0 | 0 | 0 | 0 | 0 | 0 | 0 | 0 | 0 | 0 | 0 | 45 | 0 | 0 |
| B4 (Lubricant MB using B1) | 5 | 5 | 5 | 5 | 5 | 5 | 0 | 0 | 5 | 5 | 5 | 5 | 0 | 0 |
| D1 (Sb: 230 ppm) | 0 | 0 | 0 | 0 | 0 | 0 | 0 | 0 | 0 | 0 | 0 | 0 | 45 | 95 |
| D2 (Lubricant MB using D1) | 0 | 0 | 0 | 0 | 0 | 0 | 5 | 5 | 0 | 0 | 0 | 0 | 5 | 5 |
| IV of film | 0.72 | 0.71 | 0.71 | 0.69 | 0.68 | 0.68 | 0.65 | 0.7 | 0.7 | 0.69 | 0.68 | 0.69 | 0.65 | 0.65 |
| CT content in film | 5230 | 5520 | 5660 | 6270 | 6320 | 6350 | 6380 | 5680 | 5730 | 6310 | 6400 | 5750 | 6680 | 6520 |
| Sb amount in film (ppm) | 19 | 57 | 95 | 133 | 171 | 180.5 | 192 | 106.5 | 95 | 133 | 180.5 | 95 | 210 | 230 |
| Ge amount in film (ppm) | 0.16 | 0.48 | 0.8 | 1.12 | 1.44 | 1.52 | 1.52 | 0.8 | 0.8 | 1.12 | 1.52 | 0.8 | 0.8 | 0 |
| Al amount in film (ppm) | 18.9 | 14.7 | 10.5 | 6.3 | 2.1 | 1.05 | 0 | 9.45 | 8.25 | 6.3 | 1.05 | 5.55 | 0 | 0 |
| Intrinsic viscosity retention (re-kneading: once) | 95 | 94 | 94 | 92 | 90 | 90 | 87 | 93 | 94 | 91 | 90 | 92 | 87 | 86 |
| Intrinsic viscosity retention (re-kneading: three times) | 87 | 86 | 85 | 83 | 80 | 79 | 76 | 84 | 85 | 82 | 79 | 83 | 75 | 75 |
| Coloring of end face after a film was formed again | A | A | A | A | B | B | C | A | A | A | B | A | C | C |

Examples 12 to 15

The polyester resins for the intermediate layer shown in Table 3 were fed to an extruder 1, and the polyester resins for the surface layer were fed to an extruder 2, followed by melting at 285°C. Then, a biaxially oriented PET film was produced by using a two-type, three-layer die so that the ratio of the surface layer to intermediate layer to surface layer was 1/8/1 in thickness.

For evaluation of the film recovery and reusability, the same single-layer configuration as in Example 1 was used.

Table 3

| | | Ex. 12 | Ex. 13 | Ex. 14 | Ex. 15 |
|---|---|---|---|---|---|
| Intermediate layer | A1 | 70 | 70 | 70 | 80 |
| | B1 (Al: 21 ppm, P: 45 ppm) | 30 | 0 | 0 | 20 |
| | B2 (Al: 16 ppm, P: 26 ppm) | 0 | 30 | 0 | 0 |
| | B3 (Al: 10 ppm, P: 16 ppm) | 0 | 0 | 30 | 0 |
| Surface layer | D1 (Sb: 230 ppm) | 95 | 95 | 95 | 95 |
| | D2: Lubricant MB | 5 | 5 | 5 | 5 |
| Coloring of end face after film was formed again | | A | A | A | A |

Examples 16 to 17

As a polyester resin A2, recovered flakes of selvages obtained from another polyester film production line (IV = 0.61 dl/g, Sb content: 140 ppm, lubricant particles: a trace amount) were prepared. As a polyester resin B5, a polyester resin that was obtained by melt polymerization in the same manner as for the polyester resin B1 and that had an intrinsic viscosity of 0.67 dl/g by melt polymerization alone was prepared. Then, films were produced in the same manner as in Example 1 by using the polyester resins shown in Table 4. After stretching in the longitudinal direction, an easy-to-adhere coat paint of the following composition was applied to both surfaces of the film. The film was then guided to a tenter to obtain a biaxially stretched PET having an easy-to-adhere layer on both surfaces.

Preparation of Easy-to-adhere Coat Paint

A transesterification reaction and a polycondensation reaction were performed in a standard manner to prepare a water-dispersible sulfonic acid metal salt group-containing copolymerized polyester resin comprising, as dicarboxylic acid components (based on all the dicarboxylic acid components), 46 mol% of terephthalic acid, 46 mol% of isophthalic acid, and 8 mol% of sodium 5-sulfonatoisophthalate; and as glycol components (based on all the glycol components), 50 mol% of ethylene glycol and 50 mol% of neopentyl glycol. Subsequently, 51.4 parts by mass of water, 38 parts by mass of isopropyl alcohol, 5 parts by mass of n-butyl cellosolve, and 0.06 parts by mass of nonionic surfactant were mixed and then stirred under heating. When the temperature reached 77°C, 5 parts by mass of the above water-dispersible sulfonic acid metal salt group-containing copolymerized polyester resin was added, and continuously stirred until the mass of the resin disappeared. Thereafter, the resulting resin aqueous dispersion was cooled to an ordinary temperature, thereby obtaining a homogeneous water-dispersible copolymerized polyester resin solution with a solids content of 5.0 mass%. Furthermore, 3 parts by mass of aggregate silica particles (Sylysia 310, produced by Fuji Silysia Chemical Ltd.) were dispersed in 50 parts by mass of water. Then, 0.54 parts by mass of the water dispersion of Sylysia 310 were added to 99.46 parts by mass of the above water-dispersible copolymerized polyester resin solution. While stirring the mixture, 20 parts by mass of water were added, thereby obtaining an easy-to-adhere coat paint.

Table 4

| | Ex. 16 | Ex. 17 |
|---|---|---|
| A2 | 50 | 70 |
| B5 (Al: 21 ppm, P: 45 ppm) | 50 | 30 |
| IV of film | 0.61 | 0.6 |
| Intrinsic viscosity retention (re-kneading: once) | 94 | 92 |

(continued)

| | Ex. 16 | Ex. 17 |
|---|---|---|
| Intrinsic viscosity retention (re-kneading: three times) | 86 | 85 |
| Coloring of end face after film was formed again | A | A |

As shown in Table 2, the intrinsic viscosity retention tended to decrease as the amount of the polyester resin B1 decreased as in Example 1 to Example 6. However, the intrinsic viscosity retention of these Examples was still higher than those of Comparative Example 1, Comparative Example 2, and the Reference Example. Even Examples 7 to 12, in which the polyester resin B2 or B3 with a small aluminum content and a small phosphorus content was used for cost reduction, had a high intrinsic viscosity retention. The coloring of the end faces of the roll after a film was formed again was not a significant issue in the Examples.

Examples 12 to 15 shown in Table 3 are examples in which the recovered polyester resin A1 was used for the intermediate layer. The coloring of the end faces of the roll after a film was formed again was not a significant issue in the Examples.

Examples 16 and 17 shown in Table 4 are examples in which a recovered polyester resin from a film production process was used. In these Examples also, the coloring of the end faces of the roll after a film was formed again was not a significant issue.

Example 18

A biaxially stretched PET film was obtained in the same manner by feeding the polyester resin (A1), polyester resin (B1), polyester resin (D2), and polyester resin (D3) in a blending ratio of 50:40:5:5 (parts by mass) to a single-screw extruder. The adhesion to the casting drum was performed by electrostatic adhesion using wire electrodes. Even when the casting speed was increased, air entrapment did not occur in the adhesion to the drum, and stable casting was possible.

The intrinsic viscosity retention was 94% after re-kneading was performed once and 84% after re-kneading was performed three times. Further, no difference in color tone was perceived at the end faces of the film obtained by using the re-melted resin.

The casting sheet of the polyester resin composition constituting the film of Example 18 was crushed, and the amount of each element was determined in the same manner as in the section "Determination of Amount of Each Element in Polyester Resin (D3)." According to the results, the antimony element was 105 ppm by mass, the aluminum element was 10 ppm by mass, the magnesium element was 50 ppm by mass, the potassium element was 5 ppm by mass, and the phosphorus element was 53 ppm by mass.

The melt resistivity of the polyester resin composition constituting the film of Example 18 as determined by the following method was $0.22 \times 10^8$ Ω•cm.

Method for Measuring Melt Resistivity

A uniform layer of a molten polyester composition having a width of 2 cm and a thickness of 0.6 mm was formed such that two electrodes (stainless steel wires with a diameter of 0.6 mm) were placed on both end portions of the polyester composition that had been melted at 275°C, and that it is sandwiched between two quartz plates having a width of 2 cm. The current (io) was measured when a DC voltage of 120 V was applied, and using the measured value, the melt resistivity ρi (Ω•cm) was determined according to the following formula.

$$\rho i(\Omega \bullet cm) = (A/L) \times (V/io)$$

In the formula, A represents an electrode area ($cm^2$), L represents a distance between electrodes (cm), and V represents a voltage (V).

A ($cm^2$) = Width of molten polyester composition layer × thickness = 2 (cm) × 0.06 (cm), and V = 120 (V). L was measured without including the diameter of the electrodes.

Industrial Applicability

A polyester film produced by mixing a recovered polyester resin (A) and a polyester resin (B) comprising an aluminum compound and a phosphorus compound has reduced coloring and reduced reduction in molecular weight. Such a polyester film can also have excellent recyclability. The present invention can contribute to solving various problems by,

for example, reducing resource depletion, decreasing marine debris, and curbing global warming.

**Claims**

1. A method for producing a polyester film, comprising mixing a recovered polyester resin (A) and a polyester resin (B) comprising an aluminum compound and a phosphorus compound, the polyester resin (A) satisfying the following (1) to (3):

   (1) the polyester resin (A) comprises at least one element selected from antimony, titanium, and germanium;
   (2) the polyester resin (A) has a total content of antimony, titanium, and germanium elements of 2 to 500 ppm by mass; and
   (3) the polyester resin (A) has an intrinsic viscosity of 0.5 to 0.8 dl/g.

2. The method for producing a polyester film according to claim 1, wherein the polyester resin (B) satisfies the following (4) and (5):

   (4) the polyester resin (B) has an aluminum element content of 5 to 50 ppm by mass; and
   (5) the polyester resin (B) has a phosphorus element content of 5 to 1000 ppm by mass.

3. The method for producing a polyester film according to claim 1 or 2, comprising melt-mixing the polyester resin (A) and the polyester resin (B) to obtain a polyester resin composition (C) .

4. The method for producing a polyester film according to any one of claims 1 to 3, further comprising mixing a polyester resin (D).

5. A method for producing a polyester film, comprising mixing a polyester resin composition (C) and a polyester resin (D), the polyester resin composition (C) being a molten mixture of a recovered polyester resin (A) and a polyester resin (B) comprising an aluminum compound and a phosphorus compound, and the polyester resin (A) satisfying the following (1) to (3):

   (1) the polyester resin (A) comprises at least one element selected from antimony, titanium, and germanium;
   (2) the polyester resin (A) has a total content of antimony, titanium, and germanium elements of 2 to 500 ppm by mass; and
   (3) the polyester resin (A) has an intrinsic viscosity of 0.5 to 0.8 dl/g.

6. The method for producing a polyester film according to any one of claims 1 to 5, wherein the polyester resin composition (C) has an intrinsic viscosity retention of 89% or more.

7. The method for producing a polyester film according to any one of claims 1 to 6, wherein the polyester resin (A) has an intrinsic viscosity retention of 92% or less.

8. The method for producing a polyester film according to any one of claims 1 to 7, wherein the polyester resin (B) has an intrinsic viscosity retention of 93% or more.

9. The method for producing a polyester film according to any one of claims 1 to 8, wherein a polyester resin (E) constituting the polyester film has an intrinsic viscosity retention of 89% or more.

10. The method for producing a polyester film according to any one of claims 1 to 9, wherein the amount of the polyester resin (A) is 5 to 95 parts by mass per 100 parts by mass of the total of the polyester resin (A) and the polyester resin (B).

11. The method for producing a polyester film according to any one of claims 1 to 10, wherein the amount of the polyester resin (D) is 5 to 95 parts by mass per 100 parts by mass of the total of the polyester resin (A), the polyester resin (B), and the polyester resin (D).

12. The method for producing a polyester film according to any one of claims 1 to 11, wherein the polyester film is a multilayer polyester film having at least two layers, and wherein at least one surface of the film is a layer that does not contain the polyester resin (A).

**13.** The method for producing a polyester film according to any one of claims 1 to 12, wherein the phosphorus compound comprises a phosphorus element and a phenolic structure in the same molecule.

**14.** The method for producing a polyester film according to any one of claims 1 to 13, wherein the polyester resin (A) comprises at least antimony and germanium elements.

**15.** The method for producing a polyester film according to any one of claims 1 to 14, wherein the polyester resin (A) comprises at least isophthalic acid as a copolymerization component.

**16.** The method for producing a polyester film according to claim 4, wherein the polyester resin (D) comprises a melt resistivity adjuster.

**17.** A polyester film composed of a resin (E) comprising a recovered polyester resin (A) and a polyester resin (B) comprising an aluminum compound and a phosphorus compound, the polyester resin (A) satisfying the following (1) to (3):

(1) the polyester resin (A) comprises at least one element selected from antimony, titanium, and germanium;
(2) the polyester resin (A) has a total content of antimony, titanium, and germanium elements of 2 to 500 ppm by mass; and
(3) the polyester resin (A) has an intrinsic viscosity of 0.5 to 0.8 dl/g.

**18.** The polyester film according to claim 17, wherein the polyester resin (B) satisfies the following (4) and (5):

(4) the polyester resin (B) has an aluminum element content of 5 to 50 ppm by mass; and
(5) the polyester resin (B) has a phosphorus element content of 5 to 1000 ppm by mass.

**19.** The polyester film according to claim 17 or 18, wherein the polyester resin (E) further comprises a polyester resin (D).

**20.** The polyester film according to any one of claims 17 to 19, wherein the polyester resin (E) has an intrinsic viscosity retention of 89% or more.

**21.** A polyester film comprising at least antimony, germanium, and aluminum elements in a polyester resin constituting the film.

**22.** The polyester film according to claim 21, wherein the polyester resin constituting the film comprises isophthalic acid as a copolymerization component.

**23.** The polyester film according to claim 19, wherein the polyester resin (D) comprises a melt resistivity adjuster.

## INTERNATIONAL SEARCH REPORT

International application No. **PCT/JP2023/010256**

**A. CLASSIFICATION OF SUBJECT MATTER**

***C08L 67/02***(2006.01)i; ***C08J 5/18***(2006.01)i
FI: C08L67/02; C08J5/18 CFD

According to International Patent Classification (IPC) or to both national classification and IPC

**B. FIELDS SEARCHED**

Minimum documentation searched (classification system followed by classification symbols)

C08L67/02; C08J5/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2014-170914 A (MITSUBISHI PLASTICS INC) 18 September 2014 (2014-09-18) claims, paragraphs [0012]-[0013], [0028]-[0029], example 5 | 1-20, 23 |
| X | JP 2015-28962 A (MITSUBISHI PLASTICS INC) 12 February 2015 (2015-02-12) claims, paragraphs [0013]-[0014], [0024]-[0025], example 5 | 1-20, 23 |
| X | WO 2012/029725 A1 (TOYO BOSEKI KABUSHIKI KAISHA) 08 March 2012 (2012-03-08) claims, paragraphs [0029], [0035], [0048], [0054], [0056], example 6 | 1-20, 23 |
| X | JP 2003-301038 A (TOYO BOSEKI KABUSHIKI KAISHA) 21 October 2003 (2003-10-21) claims, paragraphs [0096], [0105], examples | 1-20, 23 |
| P, X | WO 2022/234749 A1 (TOYOBO CO., LTD.) 10 November 2022 (2022-11-10) claims, paragraph [0082], examples | 1-3, 6-10, 13-15, 17-20 |
| P, X | WO 2022/270505 A1 (TOYOBO CO., LTD.) 29 December 2022 (2022-12-29) claims, paragraph [0081], examples | 1-3, 6-10, 13-15, 17-20 |

☐ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **15 May 2023** | **30 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2023/010256**

**Box No. III Observations where unity of invention is lacking (Continuation of item 3 of first sheet)**

This International Searching Authority found multiple inventions in this international application, as follows:

Claims are classified into the following two inventions.
(Invention 1) Claims 1-20 and 23

The claims 1, 5, and 7 have the special technical feature in which "a polyester film is prepared by mixing recovered polyester resins (A) having predetermined properties and polyester resins (B) containing aluminum compounds and phosphorus compounds," and are thus classified as invention 2. Claims 2-4, 6-16, 18-20, and 23 dependent on claims 1, 5, and 17 are also classified as invention 1.

(Invention 2) Claims 21-22

Claim 21 shares, with claim 1 classified as invention 1, the common technical feature of a "polyester film containing aluminum element in polyester resin." However, this technical feature is so well known that it is not necessary to provide documents, and thus cannot be said to be a special technical feature. Also, there are no other same or corresponding special technical features between claim 21 and claim 1.

In addition, claim 21 is not dependent on claim 1. Furthermore, claim 21 is not substantially identical to or similarly closely related to any of the claims classified as invention 1.

Therefore, claim 21 cannot be classified as invention 1.

Also, claim 21 has the special technical feature of a "polyester film containing antimony element, germanium element, and aluminum element in polyester resin," and is thus classified as invention 2. Claim 22 dependent on claim 21 is also classified as invention 2.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **claims 1-20, 23**

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**INTERNATIONAL SEARCH REPORT**
**Information on patent family members**

International application No.
**PCT/JP2023/010256**

| Patent document cited in search report | Publication date (day/month/year) | Patent family member(s) | Publication date (day/month/year) |
|---|---|---|---|
| JP 2014-170914 A | 18 September 2014 | (Family: none) | |
| JP 2015-28962 A | 12 February 2015 | (Family: none) | |
| WO 2012/029725 A1 | 08 March 2012 | (Family: none) | |
| JP 2003-301038 A | 21 October 2003 | (Family: none) | |
| WO 2022/234749 A1 | 10 November 2022 | (Family: none) | |
| WO 2022/270505 A1 | 29 December 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013154042 A
- WO 2013154043 A
- WO 2007032325 A
- JP 2006169432 A